# EUROPEAN PATENT APPLICATION

(11) **EP 4 825 913 A1**
(43) Date of publication of application: **21.10.2026**
(21) Application number: 24903420.8
(22) Date of filing: 13.11.2024
(51) Int. Cl.: C08L 15/00, B60C 1/00, C08K 3/36, C08K 5/20, C08L 9/00

(54) **VULCANIZED RUBBER COMPOSITION FOR TIRES, AND TIRE**

(30) Priority: 13.12.2023 JP 2023210588
(71) Applicant: BRIDGESTONE CORPORATION, Chuo-ku Tokyo 104-8340 (JP)
(72) Inventor: IKUTA, Akifumi, Tokyo 104-8340 (JP)
(74) Representative: Marks & Clerk LLP
(86) International application number: PCT/JP2024/040388
(87) International publication number: WO 2025/126760

(57) **Abstract**

With the aim of providing a vulcanized rubber composition for a tire having excellent on-ice performance, a vulcanized rubber composition for a tire is obtained through vulcanization of a rubber composition containing: a rubber component that includes a modified conjugated diene-based polymer having a (meth)acrylic acid ester in a molecule; and a filler that includes at least silica, wherein content of the silica in the rubber composition is 30 parts by mass to 70 parts by mass per 100 parts by mass of the rubber component, a proportion constituted by the silica in the filler is 55 mass% or more, and the vulcanized rubber composition for a tire has a plurality of voids.

## Description

### TECHNICAL FIELD

The present disclosure relates to a vulcanized rubber composition for a tire and a tire.

### BACKGROUND

When a tire runs on an icy or snowy road surface, the tire may slip due to a water film formed between the road surface and the tire, resulting in decreased braking performance. Therefore, in studless tires, improvement in on-ice performance, such as effective grip even on icy or snowy road surfaces and ease of braking the vehicle, is required.

As a method for enhancing on-ice performance, it is known to increase the surface roughness (surface irregularity) of tread rubber or to improve flexibility (flexibility and adhesiveness) at low temperatures. Increasing the surface roughness of the tread rubber is considered to have the effect of increasing the contact area with the icy surface compared to tread rubber with a smooth surface, as the recesses capture the water film on the ice and the protrusions contact the icy surface. Here, as a method for increasing the surface roughness of tread rubber, it is common to blend a foaming agent or thermally expandable microcapsules into the rubber composition (for example, PTL 1).

### CITATION LIST

### Patent Literature

PTL 1: JP 2020-19862 A

### SUMMARY

### (Technical Problem)

However, in the method exemplified in PTL 1, although the water film can be captured as the surface roughness increases, the area capable of contacting the icy surface decreases. Therefore, it can be said that there is a limit to the effect of improving on-ice performance by surface roughness.

Therefore, an object of the present disclosure is to provide a vulcanized rubber composition for a tire having excellent on-ice performance. Another object of the present disclosure is to provide a tire having excellent on-ice performance.

### (Solution to Problem)

The inventors of the present disclosure have conducted intensive studies to further improve on-ice performance. As a result, they found that, in addition to including a modified conjugated diene-based polymer having a (meth)acrylic acid ester in a molecule in the vulcanized rubber composition for a tire, by forming a plurality of voids, a significant improvement in on-ice performance can be achieved. Furthermore, by optimizing the content of silica in the rubber composition and the proportion of silica in the filler, it becomes possible to increase the contact area with the road surface when applied to a tire, thereby realizing even more excellent on-ice performance.

That is, the vulcanized rubber composition for a tire of the present disclosure is obtained by vulcanizing a rubber composition comprising: a rubber component that includes a modified conjugated diene-based polymer having a (meth)acrylic acid ester in a molecule; and a filler that includes at least silica, wherein content of the silica in the rubber composition is 30 parts by mass to 70 parts by mass per 100 parts by mass of the rubber component, and a proportion constituted by the silica in the filler is 55 mass% or more, and the vulcanized rubber composition for a tire has a plurality of voids. By adopting the above configuration, excellent on-ice performance can be realized.

In the vulcanized rubber composition for a tire of the present disclosure, it is preferable that content of the (meth)acrylic acid ester in the modified conjugated diene-based polymer is 0.5 mol% to 10 mol%. This is because even more excellent on-ice performance can be realized without impairing properties such as wear resistance.

In addition, in the vulcanized rubber composition for a tire of the present disclosure, it is preferable that the (meth)acrylic acid ester is a (meth)acrylic acid alkoxyalkyl ester. This is because even more excellent on-ice performance can be realized.

Furthermore, in the vulcanized rubber composition for a tire of the present disclosure, it is preferable that modified conjugated diene-based polymer has a glass transition temperature of -100°C to -50°C. This is because even more excellent on-ice performance can be realized without impairing properties such as wear resistance.

Furthermore, in the vulcanized rubber composition for a tire of the present disclosure, it is preferable that the modified conjugated diene-based polymer includes 1,3-butadiene units, and the 1,3-butadiene units have a vinyl bond content of 10 mol% to 20 mol%. This is because even more excellent on-ice performance can be realized without impairing properties such as wear resistance.

Furthermore, in the vulcanized rubber composition for a tire of the present disclosure, it is preferable that a content ratio of the modified conjugated diene-based polymer in the rubber component is 5 mass% to 40 mass%. This is because even more excellent on-ice performance can be realized without impairing properties such as wear resistance.

In addition, in the vulcanized rubber composition for a tire of the present disclosure, it is preferable that the rubber component further includes an unmodified conjugated diene-based polymer having a bound styrene content of less than 10% and a conjugated diene unit vinyl bond content of 20% or more. This is because excellent on-ice performance can be realized without impairing other properties.

Furthermore, in the vulcanized rubber composition for a tire of the present disclosure, it is preferable that the conjugated diene unit vinyl bond content in the unmodified conjugated diene-based polymer is 70% or less. This is because excellent on-ice performance can be realized without impairing other properties.

In addition, in the vulcanized rubber composition for a tire of the present disclosure, it is preferable that the conjugated diene unit vinyl bond content in the unmodified conjugated diene-based polymer is not less than 45% and not more than 55%. This is because excellent on-ice performance can be realized without impairing other properties.

Furthermore, in the vulcanized rubber composition for a tire of the present disclosure, it is preferable that the unmodified conjugated diene-based polymer is unmodified polybutadiene. This is because excellent on-ice performance can be realized without impairing other properties.

Furthermore, in the vulcanized rubber composition for a tire of the present disclosure, it is preferable that a content ratio of the unmodified conjugated diene-based polymer is 1 mass% to 40 mass%. This is because excellent on-ice performance can be realized without impairing other properties.

In addition, in the vulcanized rubber composition for a tire of the present disclosure, it is preferable that a mass ratio of content of the modified conjugated diene-based polymer to content of the unmodified conjugated diene-based polymer (content of modified conjugated diene-based polymer/content of liquid polymer) is 0.5 to 5. This is because even more excellent on-ice performance can be realized without impairing other properties.

In addition, in the vulcanized rubber composition for a tire of the present disclosure, it is preferable that the rubber composition further contains a void-forming agent, and it is more preferable that the void-forming agent is at least one selected from the group consisting of a foaming agent, a metal sulfate, a thermally expandable microcapsule, porous cellulose, and a lignin derivative. This is because even more excellent on-ice performance can be realized.

Furthermore, in the vulcanized rubber composition for a tire of the present disclosure, it is preferable that the rubber composition further contains composite fibers. This is because even more excellent on-ice performance can be realized.

Furthermore, in the vulcanized rubber composition for a tire of the present disclosure, it is preferable that the vulcanized rubber composition for a tire has a porosity of 5 to 45%. This is because even more excellent on-ice performance can be realized.

In addition, in the vulcanized rubber composition for a tire of the present disclosure, it is more preferable that the rubber component includes natural rubber and butadiene rubber or styrene-butadiene rubber. This is because even more excellent on-ice performance can be realized while maintaining properties such as wear resistance and low heat generating property in a favorable manner.

Furthermore, in the vulcanized rubber composition for a tire of the present disclosure, it is preferable that a content ratio of the natural rubber in the rubber component is 30 mass% to 70 mass%. This is because even more excellent on-ice performance can be realized while maintaining properties such as wear resistance and low heat generating property in a favorable manner.

Furthermore, in the vulcanized rubber composition for a tire of the present disclosure, it is preferable that a content ratio of the butadiene rubber or the styrene-butadiene rubber in the rubber component is 15 mass% to 45 mass%. This is because even more excellent on-ice performance can be realized without impairing properties such as wear resistance.

In addition, in the vulcanized rubber composition for a tire of the present disclosure, it is preferable that the rubber composition contains a fatty acid amide, and it is more preferable that the rubber composition contains 0.1 parts by mass to 10 parts by mass of the fatty acid amide per 100 parts by mass of the rubber component. This is because even more excellent on-ice performance can be realized without impairing properties such as wear resistance.

Furthermore, in the vulcanized rubber composition for a tire of the present disclosure, it is preferable that the fatty acid amide is a fatty acid bisamide, and it is more preferable that it is an ethylene bis fatty acid amide. This is because even more excellent on-ice performance can be realized.

The tire of the present disclosure is characterized in that the above-described vulcanized rubber composition for a tire is used in a tread portion. By adopting the above configuration, excellent on-ice performance can be realized.

In addition, in the tire of the present disclosure, it is preferable that a plurality of blocks are partitioned by a plurality of circumferential main grooves extending in the tire circumferential direction and a plurality of width direction grooves extending in the tire width direction on the tread surface of the tread portion, and a plurality of sipes and a plurality of shallow grooves are provided on the surface of the blocks so as to extend in mutually opposite directions in the tire width direction with respect to one direction in the tire circumferential direction, the depth of the shallow grooves is smaller than the depth of the sipes, the inclination angle θ1 of the sipes with respect to the tire circumferential direction is more than 0° and less than 90°, the inclination angle θ2 of the shallow grooves with respect to the tire circumferential direction is more than 0° and less than 90°, and the magnitude of the difference between the inclination angle θ1 and the inclination angle θ2 is 30° or less. This is because even more excellent on-ice performance can be realized without impairing properties such as wear resistance.

### (Advantageous Effect)

According to the present disclosure, it is possible to provide a vulcanized rubber composition for a tire having excellent on-ice performance. Further, according to the present disclosure, it is also possible to provide a tire having excellent on-ice performance.

### BRIEF DESCRIPTION OF THE DRAWINGS

In the accompanying drawings:
FIG. 1 is a schematic diagram illustrating a plurality of voids present in the vulcanized rubber composition for a tire according to one embodiment of the present disclosure;
FIG. 2 is a schematic diagram illustrating a cross-section of a void present in the vulcanized rubber composition for a tire according to one embodiment of the present disclosure;
FIG. 3 is a developed view schematically illustrating a tread pattern of a pneumatic tire according to one embodiment of the present disclosure;
FIG. 4A is a schematic diagram illustrating the flow of water in the case of θ1 = 60° and θ2 = 15°; and
FIG. 4B is a schematic diagram illustrating the flow of water in the case of θ1 = θ2 = 60°.

### DETAILED A

Hereinafter, embodiments of the present disclosure will be described, using drawings as necessary.

### (Vulcanized Rubber Composition for Tire)

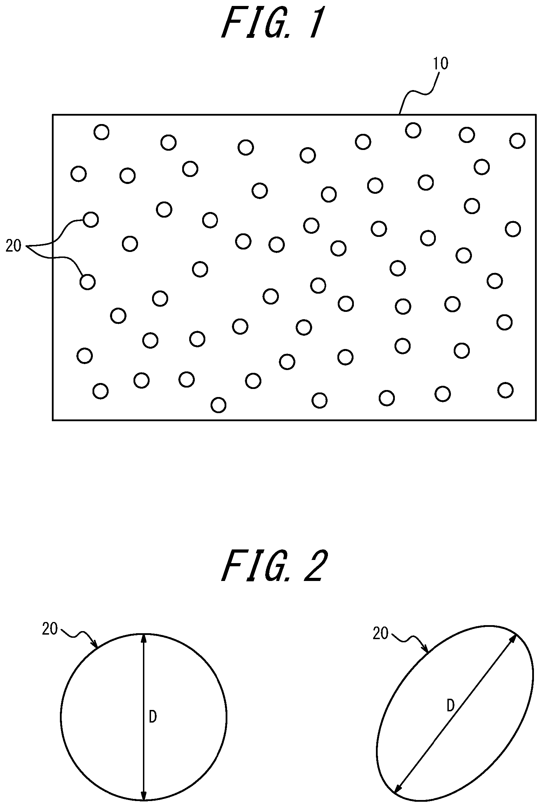

The vulcanized rubber composition for a tire of the present disclosure is a vulcanized rubber composition for a tire obtained by vulcanizing a rubber composition containing a rubber component that includes a modified conjugated diene-based polymer having a (meth)acrylic acid ester in a molecule, and, as illustrated in FIG. 1, is characterized in that the vulcanized rubber composition for a tire 10 has a plurality of voids 20.

In the vulcanized rubber composition for a tire of the present disclosure, in addition to including, in the rubber composition, a modified conjugated diene-based polymer having a (meth)acrylic acid ester in a molecule as described below, the vulcanized rubber composition for a tire 10 of the present disclosure, as illustrated in FIG. 1, has a plurality of voids 20, thereby enabling a significant improvement in on-ice performance when applied to a tire.

Here, the voids in the vulcanized rubber composition for a tire of the present disclosure refer, as illustrated in FIG. 1, to pores with an average diameter of about 1 to 500 µm formed in plurality in the vulcanized rubber composition for a tire. Further, the diameter of the voids refers, as illustrated in FIG. 2, to the largest diameter D of the void 20 (in the case where the void is not spherical, it refers to the maximum distance D between any two points on the inner wall of the void).

The average diameter of the voids refers to the average value of the diameters D of the voids 20 present in the vulcanized rubber composition for a tire of the present disclosure. In the present disclosure, the cross-section of the vulcanized rubber composition for a tire is observed using a digital microscope (Keyence Corporation, "VHX-100"), and the average value of the diameters of all voids present in one field of view (2.5 mm × 2.5 mm) is used as the average diameter. In the vulcanized rubber composition for a tire of the present disclosure, since the shape and size of the voids do not vary greatly within a single vulcanized rubber composition for a tire, the average value of the voids in one field of view can be used as the average diameter of the voids.

Further, the porosity of the vulcanized rubber composition for a tire of the present disclosure is preferably 5% to 45%. By setting the lower limit of the porosity to 5%, on-ice performance can be improved more reliably. From the same viewpoint, the porosity is preferably 7% or more, and more preferably 15% or more. On the other hand, by setting the upper limit of the porosity to 45%, even when a plurality of voids is present, a decrease in wear resistance can be more reliably suppressed. From the same viewpoint, the porosity is preferably 40% or less, and more preferably 37% or less.

The porosity refers to the proportion (volume %) of the volume of the voids in the vulcanized rubber composition for a tire of the present disclosure. The method for measuring the porosity is not particularly limited, and, for example, it can be measured using a densimeter (ViBRA densimeter "DMA-220" manufactured by Shinko Denshi Co., Ltd.), or the like.

Here, although the vulcanized rubber composition for a tire of the present disclosure has a plurality of voids, the method for providing the voids is not particularly limited. The voids can be formed using known techniques according to the conditions of the voids and the equipment for producing the vulcanized rubber composition for a tire.

For example, as described below, a method may be mentioned in which a foaming agent, foaming auxiliary agent, composite fibers, or the like is blended into the rubber composition before vulcanization to provide voids in the vulcanized rubber composition for a tire. The porosity can be controlled by changing the vulcanization conditions or by adjusting the content of void-introducing agents such as foaming agents or composite fibers.

The vulcanized rubber composition for a tire refers to a vulcanized rubber obtained by vulcanizing an unvulcanized rubber composition. The vulcanization conditions (temperature, time) are not particularly limited, and vulcanization treatment can be performed under any conditions according to the required performance.

The unvulcanized rubber composition (hereinafter simply referred to as "rubber composition") that serves as the base for the vulcanized rubber composition for a tire of the present disclosure will be described below.

The rubber composition includes a rubber component that contains a modified conjugated diene-based polymer having a (meth)acrylic acid ester in a molecule.

### (Rubber Component)

The rubber component contained in the rubber composition is required to include a modified conjugated diene-based polymer having a (meth)acrylic acid ester in a molecule (hereinafter, sometimes referred to as "(meth)acrylic acid ester-modified polymer").

Since the (meth)acrylic acid ester has hydrophilicity, by using a polymer in which a (meth)acrylic acid ester is incorporated in the molecule as the rubber component, the rubber surface can be made hydrophilic, thereby greatly improving on-ice performance. In addition, since the (meth)acrylic acid ester-modified polymer has a (meth)acrylic acid ester portion in the molecule, it is possible to suppress deterioration of properties such as wear resistance compared to the case where a hydrophilic material such as a resin is added to the rubber composition.

The (meth)acrylic acid ester refers to an acrylic acid ester and/or a methacrylic acid ester, and "having a (meth)acrylic acid ester in a molecule" means that the (meth)acrylic acid ester is present in a state incorporated in the molecule, such as a functional group (acryloyl group, methacryloyl group), and does not include mixtures. Among these, the (meth)acrylic acid ester is preferably a (meth)acrylic acid alkoxyalkyl ester.

The (meth)acrylic acid ester-modified polymer is not particularly limited as long as it has a (meth)acrylic acid ester in the molecule, but the content of the (meth)acrylic acid ester in the (meth)acrylic acid ester-modified polymer is preferably 0.5 to 10 mol%. By setting the content of the (meth)acrylic acid ester in the (meth)acrylic acid ester-modified polymer to 1 mol% or more, sufficient hydrophilicity can be obtained, resulting in even better on-ice performance, and by setting the content to 10 mol% or less, deterioration of properties such as wear resistance can be suppressed.

From the same viewpoint, the content of the (meth)acrylic acid ester in the (meth)acrylic acid ester-modified polymer is preferably 2 to 7 mol%, and more preferably 3 to 6 mol%.

The content of the (meth)acrylic acid ester in the (meth)acrylic acid ester-modified polymer can be measured by NMR.

Further, from the viewpoint of achieving even better on-ice performance, the glass transition temperature of the (meth)acrylic acid ester-modified polymer is preferably -100°C to -50°C, and more preferably -90°C to -70°C.

The glass transition temperature of the (meth)acrylic acid ester-modified polymer can be measured using a differential scanning calorimeter (for example, DSC, "DSCQ2000" manufactured by TA Instruments Japan) in accordance with JIS K 7121-1987.

Here, the conjugated diene-based polymer constituting the (meth)acrylic acid ester-modified polymer is not particularly limited, but is preferably a homopolymer of a conjugated diene unit or a copolymer having an aromatic vinyl unit and a conjugated diene unit.

Examples of the conjugated diene compound as a monomer include 1,3-butadiene, isoprene, 1,3-pentadiene, 2,3-dimethylbutadiene, 2-phenyl-1,3-butadiene, 1,3-hexadiene, and the like, among which 1,3-butadiene and isoprene are preferred. On the other hand, examples of the aromatic vinyl compound as a monomer include styrene, p-methylstyrene, m-methylstyrene, p-tert-butylstyrene, α-methylstyrene, chloromethylstyrene, vinyltoluene, and the like.

Furthermore, it is preferable that the conjugated diene-based polymer constituting the (meth)acrylic acid ester-modified polymer has a vinyl bond content in the 1,3-butadiene units of 10 to 20 mol%, and more preferably 13 to 18 mol%. By setting the vinyl bond content in the 1,3-butadiene units to less than 18 mol%, an increase in the hardness of the rubber and deterioration of on-ice performance can be suppressed. Also, by setting the vinyl bond content in the 1,3-butadiene units to 13% or more, the strength of the (meth)acrylic acid ester-modified polymer can be enhanced.

The method for producing the diene-based polymer rubber of the present disclosure is not particularly limited, but it can be produced by copolymerizing a diene monomer and a (meth)acrylic acid ester monomer. The polymerization method is not particularly limited and may be a known emulsion polymerization or solution polymerization, but emulsion polymerization is preferred from the viewpoint of industrial productivity. That is, it is preferable to polymerize a monomer mixture containing a diene monomer and a (meth)acrylic acid ester monomer in an aqueous medium in the presence of an emulsifier. In emulsion polymerization, in addition to the emulsifier, a polymerization initiator and a molecular weight modifier can be used, and, in addition, commonly used polymerization auxiliaries can also be used.

The emulsifier is not particularly limited, but a carboxylic acid-based emulsifier can be suitably used, and examples of the carboxylic acid-based emulsifier include fatty acid soaps or rosin acid soaps. As the fatty acid soap, sodium or potassium salts of long-chain aliphatic carboxylic acids having 12 to 18 carbon atoms, such as lauric acid, myristic acid, palmitic acid, stearic acid, oleic acid, or mixed aliphatic carboxylic acids thereof, can be used. As the rosin acid soap, sodium or potassium salts of natural rosin such as gum rosin, wood rosin, or tall oil rosin that has been disproportionated or hydrogenated can be mentioned. Examples of natural rosin include those mainly composed of abietic acid, levopimaric acid, palustric acid, dehydroabietic acid, tetrahydroabietic acid, and neoabietic acid. The amount of emulsifier used is preferably 0.05 to 10 parts by weight, more preferably 0.5 to 5 parts by weight, per 100 parts by weight of the monomer used for polymerization.

The polymerization initiator is not particularly limited as long as it is a radical initiator, and examples include inorganic peroxides such as potassium persulfate, sodium persulfate, ammonium persulfate, potassium perphosphate, hydrogen peroxide; organic peroxides such as t-butyl peroxide, cumene hydroperoxide, p-menthane hydroperoxide, t-butyl cumyl peroxide, acetyl peroxide, isobutyryl peroxide, octanoyl peroxide, dibenzoyl peroxide, 3,5,5-trimethylhexanoyl peroxide, t-butyl peroxyisobutyrate, diisopropylbenzene hydroperoxide; azo compounds such as azobisisobutyronitrile, azobis-2,4-dimethylvaleronitrile, azobiscylcohexanecarbonitrile, azobisisobutyric acid methyl ester; and the like. These polymerization initiators can be used alone or in combination of two or more. Inorganic or organic peroxides are preferred as the polymerization initiator. When a peroxide is used as the polymerization initiator, it may be used in combination with a reducing agent as a redox-type polymerization initiator. The reducing agent is not particularly limited, and examples include compounds containing metal ions in a reduced state such as ferrous sulfate, cuprous naphthenate; sulfinates such as sodium hydroxymethanesulfinate; sulfites such as sodium sulfite, potassium sulfite, sodium hydrogensulfite, sodium formaldehyde sulfoxylate, potassium hydrogensulfite; and the like. The amount of polymerization initiator added is preferably 0.01 to 2 parts by weight per 100 parts by weight of the monomer used for polymerization.

The molecular weight modifier is not particularly limited, and examples include α-methylstyrene dimer; mercaptans such as t-dodecyl mercaptan, n-dodecyl mercaptan, octyl mercaptan; halogenated hydrocarbons such as carbon tetrachloride, methylene chloride, methylene bromide; sulfur-containing compounds such as tetraethylthiuram disulfide, dipentamethylenethiuram disulfide, diisopropylxanthogen disulfide; among which mercaptans are preferred, and t-dodecyl mercaptan is more preferred. These molecular weight modifiers may be used alone or in combination of two or more. The amount of molecular weight modifier used varies depending on the type, but is preferably 0.1 to 1.5 parts by weight, more preferably 0.2 to 1.0 parts by weight, per 100 parts by weight of the monomer used for polymerization.

As the medium for emulsion polymerization, an aqueous medium such as water is usually used. The amount of aqueous medium is preferably 80 to 500 parts by weight, more preferably 80 to 300 parts by weight, per 100 parts by weight of the monomer used for polymerization.

In emulsion polymerization, as necessary, polymerization auxiliaries such as stabilizers, dispersants, pH adjusters, deoxygenating agents, and particle size adjusters can be used. When these are used, the type and amount are not particularly limited.

As the method for adding the monomer, for example, a method in which all the monomers to be used are added at once to the reaction vessel, a method in which the monomers are added continuously or intermittently as the polymerization proceeds, a method in which a part of the monomers is added and reacted up to a specific conversion rate, and then the remaining monomers are added continuously or intermittently for polymerization, and the like can be mentioned, and any method may be adopted. When the monomers are mixed and added continuously or intermittently, the composition of the mixture may be constant or may be varied. Further, each monomer may be mixed in advance and then added to the reaction vessel, or may be added separately to the reaction vessel.

The polymerization temperature during emulsion polymerization is not particularly limited, but is usually 0 to 95°C, and preferably 5 to 70°C. The polymerization time is not particularly limited, but is usually about 5 to 40 hours.

The terminator is not particularly limited as long as it is usually used in emulsion polymerization, and specific examples include hydroxylamine, hydroxylamine sulfate, diethylhydroxylamine, hydroxylamine sulfonic acid and its alkali metal salts; hydroxylamine compounds; sodium dimethyldithiocarbamate; hydroquinone derivatives; catechol derivatives; aromatic hydroxydithiocarboxylic acids such as hydroxy-dimethylbenzenedithiocarboxylic acid, hydroxy-diethylbenzenedithiocarboxylic acid, hydroxy-dibutylbenzenedithiocarboxylic acid, and their alkali metal salts; and aromatic hydroxydithiocarboxylic acid compounds; and the like. The amount of terminator used is not particularly limited, but is usually 0.05 to 2 parts by weight per 100 parts by weight of the monomer used for polymerization.

Then, with respect to the latex of the copolymer obtained by emulsion polymerization, if desired, an antioxidant such as a phenol-based stabilizer, phosphorus-based stabilizer, or sulfur-based stabilizer is added, and then salting out or coagulation with alcohol, filtration, and drying are performed to obtain the diene-based polymer rubber of the present disclosure. The filtration and drying steps following coagulation in this case can be carried out by known methods. The amount of antioxidantr blended is preferably 0.05 to 2 parts by weight per 100 parts by weight of the diene-based polymer rubber or per 100 parts by weight of the monomer used for polymerization.

The rubber component may contain, in addition to the (meth)acrylic acid ester-modified polymer, any rubber as desired.

For example, from the viewpoint of obtaining excellent anti-cut resistance and wear resistance, it is preferable that the rubber component contains a diene-based rubber.

Examples of the diene-based rubber include natural rubber, synthesized polyisoprene (IR), styrene-butadiene copolymer rubber (SBR), polybutadiene rubber (BR), and the like. The diene-based synthetic rubber in the rubber component may be contained alone or as a blend of two or more. Further, the rubber component may contain a non-diene-based synthetic rubber according to the required performance.

Among the diene-based rubbers described above, it is preferable that the rubber component contains natural rubber and butadiene rubber or styrene-butadiene rubber.

By including these rubbers, it is possible to maintain good anti-cut resistance and wear resistance while also improving on-ice performance.

Note that the above-mentioned (meth)acrylic acid ester-modified polymer is not included in the butadiene rubber and styrene-butadiene rubber described above.

The content ratio of the modified conjugated diene-based polymer in the rubber component is not particularly limited, but is preferably 5 to 50 mass%, and more preferably 10 to 45 mass%.

By setting the content ratio of the modified conjugated diene-based polymer in the rubber component to 5 mass% or more, on-ice performance can be improved more reliably, and by setting it to 50 mass% or less, deterioration of properties such as wear resistance can be more reliably suppressed.

Furthermore, regarding the content of natural rubber in the rubber component, there are no particular limitations; however, from the viewpoint of further enhancing wear resistance and on-ice performance, it is preferable that the content of natural rubber is 30 mass% or more of the rubber component. By using a rubber component containing a certain amount of natural rubber together with fatty acid amides and the like, which will be described later, it is possible to more reliably improve the on-ice performance of the vulcanized rubber composition for a tire. From the same viewpoint, it is preferable that the content of natural rubber in the rubber component is 35 mass% or more, and more preferably 40 mass% or more. As for the upper limit, it is preferably 90 mass% or less, and more preferably 80 mass% or less.

Furthermore, regarding the content of butadiene rubber or styrene-butadiene rubber in the rubber component, there are no particular limitations; however, from the viewpoint of further enhancing wear resistance and on-ice performance, it is preferably 15 to 45 mass%, and more preferably 20 to 40 mass%.

### (Fatty Acid Amide)

The vulcanized rubber composition for a tire of the present disclosure preferably contains a fatty acid amide in the rubber composition.

The fatty acid amide can promote imparting hydrophilicity to the rubber surface and increase viscous resistance, thereby further improving the on-ice performance of the vulcanized rubber composition for a tire.

Here, the content of the fatty acid amide is preferably 0.1 to 10 parts by mass per 100 parts by mass of the rubber component. When the content of the fatty acid amide is 0.1 parts by mass or more per 100 parts by mass of the rubber component, a sufficient effect of improving on-ice performance can be obtained. On the other hand, when the content of the fatty acid amide is 10 parts by mass or less per 100 parts by mass of the rubber component, it is possible to suppress deterioration of properties such as wear resistance and reinforcement of the rubber composition.

From the same viewpoint, the content of the fatty acid amide is preferably 0.1 to 8 parts by mass per 100 parts by mass of the rubber component, and more preferably 0.3 to 5 parts by mass.

Here, regarding the type of fatty acid amide, there are no particular limitations as long as it can promote imparting hydrophilicity to the rubber surface. Examples include caproic acid amide, lauric acid amide, myristic acid amide, palmitic acid amide, stearic acid amide, oleic acid amide, erucic acid amide, methylenebis stearamide, ethylenebis stearamide, and the like.

Further, from the viewpoint of achieving even better on-ice performance, it is preferable that the fatty acid amide is a fatty acid bisamide, and more preferably an ethylene bis fatty acid amide.

Here, examples of the ethylene bis fatty acid amide include ethylenebisstearamide, ethylenebisoleamide, and the like.

### (Liquid Polymer)

The rubber composition preferably further contains, in addition to the above-described rubber component and fatty acid amide, a liquid polymer having a bound styrene content of less than 10% and a vinyl bond content in the conjugated diene units of 20% or more.

By including the liquid polymer, flexibility can be ensured for the rubber composition as a whole, and furthermore, by using it together with a cyclic polyol compound or filler, which will be described later, both on-ice performance and wear resistance can be achieved at a high level.

Further, from the viewpoint of obtaining even better on-ice performance, it is preferable that the vinyl bond content in the conjugated diene compound portion of the liquid polymer is 30% or more, more preferably 40% or more, and even more preferably 45% or more. From the viewpoint of suppressing an increase in rubber hardness, it is preferable that the vinyl bond content in the conjugated diene compound portion of the liquid polymer is 70% or less, more preferably 65% or less, and even more preferably 55% or less.

Here, the liquid polymer may be any liquid polymer having a bound styrene content of less than 10% and a vinyl bond content in the conjugated diene units of 20% or more, but it is preferably an unmodified conjugated diene-based polymer. In this case, the liquid polymer tends to be unevenly distributed in the natural rubber phase of the rubber component, making it possible to obtain even better on-ice performance.

Further, when the liquid polymer is an unmodified conjugated diene-based polymer, if the bound styrene content in the conjugated diene compound portion is less than 10%, sufficient flexibility of the rubber composition can be ensured, and the on-ice performance of the vulcanized rubber and the tire having a tread portion obtained from the rubber composition can be further improved.

From the same viewpoint, it is more preferable that the bound styrene content in the conjugated diene compound portion of the liquid polymer is 5% or less, even more preferably 3% or less, and particularly preferably 0%.

Note that the liquid polymer is preferably of low molecular weight so as not to form a crosslinked structure with the rubber component even after vulcanization of the rubber composition. Specifically, the polystyrene-equivalent weight-average molecular weight measured by gel permeation chromatography (hereinafter sometimes simply referred to as weight-average molecular weight) is preferably 5,000 or more and less than 40,000.

If the weight-average molecular weight of the liquid polymer is less than 5,000, the vulcanized rubber and the tread portion of the tire obtained from the rubber composition may become excessively flexible, possibly impairing wear resistance. If the weight-average molecular weight of the liquid polymer is 40,000 or more, flexibility is lost, and the on-ice performance of the vulcanized rubber and the tire having a tread portion to which the rubber composition is applied may be impaired.

Furthermore, from the same viewpoint, the weight-average molecular weight of the liquid polymer is more preferably 5,500 to 30,000, even more preferably 6,000 to 25,000, and particularly preferably 6,500 to 20,000.

Furthermore, the content of the liquid polymer is preferably 1 to 40 parts by mass per 100 parts by mass of the rubber component. This is because flexibility can be imparted to the rubber composition, the on-ice performance of the vulcanized rubber and the tire having a tread portion obtained from the rubber composition can be improved, and a decrease in wear resistance can be suppressed.

Also, from the same viewpoint, the content of the liquid polymer is more preferably 3 to 30 parts by mass per 100 parts by mass of the rubber component, even more preferably 5 to 25 parts by mass, and particularly preferably 7 to 20 parts by mass.

Furthermore, from the viewpoint of achieving both on-ice performance and wear resistance at a higher level, it is preferable that the mass ratio of the content of the modified conjugated diene-based polymer to the content of the liquid polymer (content of modified conjugated diene-based polymer/content of liquid polymer) is 0.5 to 5. By setting the mass ratio to 0.5 or more, the effect of improving on-ice performance by the modified conjugated diene-based polymer can be sufficiently exhibited, and by setting the mass ratio to 5 or less, the effect of improving flexibility by the liquid polymer can be sufficiently exhibited.

Here, when the liquid polymer is an unmodified conjugated diene-based polymer, as for the type of conjugated diene-based polymer, as long as it has a specific weight-average molecular weight, the bound styrene content in the conjugated diene compound portion is suppressed below a certain value, and it has a specific vinyl bond content, there are no particular limitations, but a homopolymer of a conjugated diene compound or a copolymer of an aromatic vinyl compound and a conjugated diene compound is preferable.

Examples of the conjugated diene compound as a monomer include 1,3-butadiene, isoprene, 1,3-pentadiene, 2,3-dimethylbutadiene, 2-phenyl-1,3-butadiene, 1,3-hexadiene, and the like, among which 1,3-butadiene and isoprene are preferable. On the other hand, examples of the aromatic vinyl compound as a monomer include styrene, p-methylstyrene, m-methylstyrene, p-tert-butylstyrene, α-methylstyrene, chloromethylstyrene, vinyltoluene, and the like.

As the liquid polymer, either or both of polybutadiene and polyisoprene are preferable, and polybutadiene is more preferable. These monomers may be used alone or in combination of two or more.

Further, when the liquid polymer is an aromatic vinyl compound-conjugated diene compound copolymer, it is preferable that the bound amount of the aromatic vinyl compound is less than 5 mass%. By setting the bound amount of the aromatic vinyl compound to less than 5 mass%, it is possible to suppress an increase in rubber hardness and deterioration of on-ice performance.

### (Filler)

The rubber composition further contains, in addition to the above-described rubber component and the preferred components of fatty acid amide and liquid polymer, a filler containing at least silica.

By including silica as a filler, the contact area with the road surface when the vulcanized rubber composition for a tire is applied to a tire can be increased, and on-ice performance can be greatly improved.

Here, examples of the type of silica include wet silica (hydrous silicate), dry silica (anhydrous silicate), calcium silicate, aluminum silicate, and the like, among which wet silica is preferable. These types of silica may be used alone or in combination of two or more.

Further, as the wet silica, precipitated silica can be used. Precipitated silica refers to silica obtained by growing primary silica particles by advancing the reaction of the reaction solution at a relatively high temperature and in a neutral to alkaline pH region in the initial stage of production, and then controlling to the acidic side to aggregate the primary particles.

The silica is not particularly limited, but for example, the CTAB specific surface area (specific surface area by cetyltrimethylammonium bromide adsorption) can be set to 70 m²/g or more and 250 m²/g or less. The CTAB specific surface area refers to a value measured in accordance with ASTM D3765-92. However, the CTAB specific surface area is calculated from the adsorption amount of CTAB, assuming the adsorption cross-sectional area per molecule of cetyltrimethylammonium bromide on the silica surface is 0.35 nm², and the specific surface area (m²/g) thus calculated is referred to as the CTAB specific surface area.

Further, the BET specific surface area of the silica can be set to 100 m²/g or more and 250 m²/g or less. The BET specific surface area refers to the specific surface area determined by the BET method, and in the present disclosure, it can be measured in accordance with ASTM D4820-93.

The content of the silica is 30 to 70 parts by mass per 100 parts by mass of the rubber component, and the proportion of the silica in the filler is 55 mass% or more.

When the content of silica is 30 parts by mass or more per 100 parts by mass of the rubber component, and the proportion of silica in the filler is 55 mass% or more, the contact area with the road surface when the above-described vulcanized rubber composition for a tire is applied to a tire becomes large, and on-ice performance can be further improved. On the other hand, when the content of silica is 70 parts by mass or less per 100 parts by mass of the rubber component, it is possible to suppress deterioration of processability of the rubber composition and deterioration of wear resistance due to a decrease in carbon black. The upper limit of the proportion of silica in the filler is not particularly limited, but from the viewpoint of suppressing deterioration of processability of the rubber composition and deterioration of wear resistance due to a decrease in carbon black, it is preferably 80 mass% or less.

From the same viewpoint, the content of silica is preferably 35 to 65 parts by mass per 100 parts by mass of the rubber component, more preferably 40 to 60 parts by mass, and the proportion of silica in the filler is preferably 55 to 80 mass%, more preferably 60 to 75 mass%.

Further, it is preferable that the filler further contains carbon black in addition to the silica. The carbon black can reinforce the rubber composition and improve the wear resistance of the rubber composition. As the carbon black, plant-derived carbon black and carbon black obtained by recycling (also referred to as "recovered carbon black" or "recycled carbon black") are preferable. Here, examples of plant-derived carbon black include those derived from castor oil and rosin oil. Recovered carbon black will be described in detail below.

The content of carbon black (the total of recovered carbon black and carbon black other than recovered carbon black) in the rubber composition is preferably 1 part by mass or more per 100 parts by mass of the rubber component, more preferably 3 parts by mass or more, and even more preferably 5 parts by mass or more, from the viewpoint of further improving the wear resistance of the rubber composition and the tire to which it is applied. From the viewpoint of operability of the rubber composition, the content of carbon black in the rubber composition is preferably 100 parts by mass or less per 100 parts by mass of the rubber component, more preferably 80 parts by mass or less, and even more preferably 70 parts by mass or less.

In the present specification, "recovered carbon black" refers to carbon black obtained by recovering from raw materials that are waste subjected to recycling. Examples of the waste include waste rubber, used tires, waste oil, and the like. Waste rubber is not limited to that generated from rubber products, but refers to all discarded rubber including unnecessary scraps generated during production or repair of rubber products. Examples of scraps include buffing dust and peeling rubber. Buffing dust is, for example, fine rubber generated in the buffing process of retreading a tire, in which the tread portion remaining on the base tire is shaved. Peeling rubber is, for example, long rubber strips of about 1 to 2 cm width peeled from the surface of rubber products such as tires. Peeling rubber is generated by shaving the surface of rubber products such as tires using a knife with a U-shaped or V-shaped tip as a peeler. Waste rubber includes not only crosslinked rubber but also unvulcanized rubber. Rubber products include, for example, final products such as tires and rubber hoses, as well as rubber components or parts in the manufacturing stage of final products. Used tires may be those subjected to retreading, or may be waste tires generated by tire replacement, vehicle scrapping, or the like, as well as ELT (End-of-Life Tire) that have reached the end of their life as tires, or any tires discarded for any reason. Waste oil is not limited to that generated by decomposing plastics or rubber, but includes, for example, used oils discharged from industry such as animal and vegetable oils, lubrication oil, insulating oil, cutting oil, and the like. Among these, as waste oil, those having no composition other than organic substances, such as those derived from silicone rubber or polyvinyl chloride, are preferable. Further, as waste oil, those in which carbon black or rubber containing carbon black is mixed are preferable.

"Recovered carbon black" is different from carbon black directly produced from hydrocarbons such as petroleum, natural gas, or coal, that is, carbon black that is not a recycled product. Note that "used" here includes not only those actually used and then discarded, but also those manufactured but actually not used and discarded.

Further, it is preferable that the recovered carbon black is obtained by thermal decomposition of vulcanized rubber products containing carbon black. Recovered carbon black obtained by thermal decomposition of vulcanized rubber products containing carbon black is easily available because there are a large number of vulcanized rubber products containing carbon black and it can be easily obtained by thermal decomposition. Furthermore, it is preferable that the recovered carbon black is obtained from the solid residue generated by thermal decomposition of vulcanized rubber products containing carbon black. When rubber products containing carbon black are thermally decomposed, solid residue and volatile components (oil) are obtained, and recovered carbon black can be recovered from either.

When recovering carbon black from volatile components, it is possible to recover oil fractions suitable for manufacturing carbon black and use them to manufacture carbon black by existing carbon black manufacturing methods (for example, JP 2015-520259 A). In this case, unlike carbon black recovered from solid residue, there are advantages such as no impurities and no mixing of different grades. In addition, in the manufacture of carbon black with low environmental impact, there are various options such as using not only oil obtained by recovering volatile components obtained by the above-mentioned rubber thermal decomposition, but also vegetable oil, oil derived from waste plastics, and the like. However, edible resources such as vegetable oil have issues in securing a sufficient amount due to demand for other uses such as food, and it is also necessary to consider the environmental impact associated with expansion of cultivated land. Also, oil derived from waste plastics and the like is used for other purposes such as horizontal recycling of plastics, so there are also supply issues. On the other hand, when using volatile components (oil) generated by thermal decomposition of vulcanized rubber products, especially tires, it is possible to continue using existing materials within the tire industry, thereby reducing the consumption of new materials in new tire manufacturing and contributing to the reduction of environmental impact as an industry. The grade of the carbon black is not particularly limited, and examples include N134, N110, N220, N234, N219, N339, N330, N326, N351, N550, N762, and the like.

The solid residue obtained by pyrolyzing waste such as used rubber and used tires, which are representative examples of waste materials, contains, in addition to carbon black, ash content. The ash content is derived from non-volatile components contained in the rubber or tire. Therefore, the recovered carbon black obtained from such solid residue has a relatively lower content of carbon black. On the other hand, considering the various physical properties required for tires manufactured using recovered carbon black, it is preferable that the carbon content in the recovered carbon black be as high as possible. In the recovered carbon black, it is preferable that the carbon content be 80 mass% or more, more preferably 85 mass% or more, still more preferably 87 mass% or more, and particularly preferably 89 mass% or more. Furthermore, it is preferable that the carbon content in the recovered carbon black be 97 mass% or less. Note that the carbon content mentioned above is a value excluding adsorbed moisture.

Specifically, the ash content includes zinc oxide, zinc sulfide, silica, iron compounds (iron oxide), calcium oxide, aluminum oxide, magnesium oxide, and the like. In the case of recovered carbon black produced from solid residue obtained by pyrolyzing waste, even if various processes for removing ash content are performed, a certain amount of ash content remains. In the present embodiment, the inclusion of ash content in the recovered carbon black is permitted. In one embodiment, the lower limit of the ash content in the recovered carbon black may be 0.5 mass%.

The recovered carbon black can be obtained from the pyrolysis process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550-800°C in the absence of oxygen, or by vacuum pyrolysis at relatively low temperatures (paragraph [0027]). As mentioned in paragraph [0004] of JP 6856781 B2, the carbon black obtained from such a pyrolysis process generally lacks functional groups on its surface (Comparison of surface morphology and chemistry between pyrolytic carbon black and commercial carbon black, Powder Technology 160 (2005) 190-193).

The recovered carbon black may lack functional groups on its surface, or may be treated to include functional groups on its surface. The treatment to include functional groups on the surface of recovered carbon black can be carried out by conventional methods. For example, European Patent Application Publication No. 3173251 describes obtaining carbon black containing hydroxyl groups and/or carboxyl groups on its surface by treating carbon black obtained from a pyrolysis process with potassium permanganate under acidic conditions. Furthermore, JP 6856781 B2 describes obtaining activated carbon black by treating carbon black obtained from a pyrolysis process with an amino acid compound containing at least one thiol group or disulfide group, thereby activating its surface. The recovered carbon black according to the present embodiment also encompasses such carbon black treated to include functional groups on its surface.

As the pyrolysis of crosslinked rubber products (vulcanized rubber products) such as used tires, for example, a pyrolysis method at a temperature of 650°C or higher can be mentioned.

Regarding the crosslinked rubber products used for the decomposition, it is possible to group them in advance according to the type of rubber component blended, and then carry out the decomposition process for each group. Alternatively, grouping may be performed in advance according to the type of filler blended (for example, type of carbon black, type of silica, mixing ratio of carbon black and silica, etc.), and the decomposition process may be carried out for each group. Furthermore, both grouping by type of rubber component and grouping by type of filler may be performed, and the decomposition process may be carried out for each group. When the decomposition process is carried out for each group in this manner, recovered carbon black having more uniform physical properties can be obtained, and when it is blended again into a rubber component, a rubber composition with better performance can be obtained.

Furthermore, when the crosslinked rubber product used for the decomposition is derived from a tire, it is possible to group them in advance by tire type (for example, for passenger vehicles, for trucks and buses, for large vehicles such as off-road vehicles, for aircraft, for agricultural vehicles, etc.), and then carry out the decomposition process for each group. Alternatively, grouping may be performed in advance by tire component (for example, tread rubber, sidewall rubber, bead portion rubber, steel cord coating rubber, organic fiber coating rubber, pad rubber, cushion rubber, etc.), and the decomposition process may be carried out for each group. Furthermore, both grouping by tire type and grouping by tire component may be performed, and the decomposition process may be carried out for each group. When the decomposition process is carried out for each group in this manner, recovered carbon black having more uniform physical properties can be obtained, and when it is blended again into a rubber component, a rubber composition with better performance can be obtained.

It is preferable that the recovered carbon black has a nitrogen adsorption specific surface area by the BET method of 40-100 m²/g, more preferably 50-90 m²/g, and particularly preferably 55-75 m²/g.

Here, in the present specification, the nitrogen adsorption specific surface area of the recovered carbon black by the BET method is the statistical thickness specific surface area (STSA), and is determined in accordance with ASTM D6556.

It is preferable that the recovered carbon black has a pH of 4-12, more preferably 5-11, and particularly preferably 6-10.

Here, in the present specification, the pH of the recovered carbon black is determined in accordance with ASTM D1512.

It is preferable that the recovered carbon black has a toluene discoloration transmittance of 60% or more, more preferably 70% or more, and particularly preferably 80% or more.

Here, in the present specification, the toluene discoloration transmittance of the recovered carbon black is determined in accordance with ASTM D1618.

It is preferable that the recovered carbon black has a heating loss at 125°C of 3 mass% or less, more preferably 2.5 mass% or less, and particularly preferably 2 mass% or less.

Here, in the present specification, the heating loss at 125°C of the recovered carbon black is determined in accordance with ASTM D1509.

It is preferable that the recovered carbon black has a sulfur content of 5 mass% or less, more preferably 3.5 mass% or less, and particularly preferably 3 mass% or less.

It is preferable that the recovered carbon black has a 35 mesh sieve residue of 20 mass ppm or less, more preferably 15 mass ppm or less, and particularly preferably 10 mass ppm or less.

Here, in the present specification, the 35 mesh sieve residue of the recovered carbon black is determined in accordance with ASTM D1514.

It is preferable that the recovered carbon black has a 325 mesh (44 µm) sieve residue of 1000 mass ppm or less, more preferably 700 mass ppm or less, and particularly preferably 300 mass ppm or less.

Here, in the present specification, the 325 mesh (44 µm) sieve residue of the recovered carbon black is determined in accordance with ASTM D1514.

It is preferable that the recovered carbon black has a pellet hardness of 100 cN or less, more preferably 90 cN or less, and particularly preferably 80 cN or less.

Here, in the present specification, the pellet hardness of the recovered carbon black is determined in accordance with ASTM D5230.

It is preferable that the recovered carbon black has a pellet fines content of 10 mass% or less, more preferably 7 mass% or less, and particularly preferably 5 mass% or less.

Here, in the present specification, the pellet fines content of the recovered carbon black is determined in accordance with ASTM D1508.

It is preferable that the recovered carbon black has a particle size (D97) of 25 µm or less, more preferably 15 µm or less, and particularly preferably 10 µm or less.

Here, in the present specification, the particle size (D97) of the recovered carbon black is determined using a laser diffraction particle size distribution analyzer, with a refractive index of 1.33 for water and 1.75 for the filler.

It is preferable that the recovered carbon black has a proportion of particles of 5 µm or less of 50 vol% or more, more preferably 70 vol% or more, and particularly preferably 80 vol% or more.

It is preferable that the recovered carbon black has an ash content of 25 mass% or less, more preferably 20 mass% or less, and particularly preferably 15 mass% or less. When the ash content of the recovered carbon black is 25 mass% or less, the various physical properties of rubber products to which the rubber composition is applied can be improved.

Here, in the present specification, the ash content of the recovered carbon black is determined in accordance with ASTM D8474 and D1506.

It is preferable that the recovered carbon black has a dibutyl phthalate (DBP) absorption of 70-120 mL/100 g, more preferably 75-110 mL/100 g, and particularly preferably 80-100 mL/100 g.

Here, in the present specification, the DBP absorption of the recovered carbon black is determined in accordance with ASTM D2414.

It is preferable that the recovered carbon black has a compressed dibutyl phthalate (24M4DBP) absorption of 50-110 mL/100 g, more preferably 60-100 mL/100 g, and particularly preferably 70-90 mL/100 g.

Here, in the present specification, the 24M4DBP absorption of the recovered carbon black is determined in accordance with ASTM D3493.

As the recovered carbon black, commercial products can be used. As such commercial products, for example, the product name "PB365" manufactured by Enrestec Co., Ltd. can be mentioned. PB365 is recovered carbon black produced through the pyrolysis of used tires, has a nitrogen adsorption specific surface area by the BET method of 73.6 m²/g, and contains about 17 mass% of ash content.

The content of the recovered carbon black is preferably 1-100 parts by mass, more preferably 5-80 parts by mass, still more preferably 5-50 parts by mass, even more preferably 5-30 parts by mass, and particularly preferably 5-20 parts by mass, per 100 parts by mass of the rubber component. When the content of recovered carbon black is 5 parts by mass or more per 100 parts by mass of the rubber component, the effect of increasing the proportion of sustainable materials in rubber products to which the rubber composition is applied is significant, and when it is 50 parts by mass or less, the fracture resistance of the rubber composition can be more reliably maintained.

Furthermore, regarding the total content of the silica and the carbon black, it is preferably 40-90 parts by mass, and more preferably 50-80 parts by mass, per 100 parts by mass of the rubber component. This is because, while maintaining properties such as low heat generating property and processability in a favorable manner, characteristics such as wear resistance and on-ice performance of the vulcanized rubber composition for tires can be further enhanced.

In addition to the above-mentioned silica and carbon black, the filler may also include an inorganic compound represented by the following general formula (XX):

nM·xSiO_{y}·zH₂O ··· (XX)

[In the formula, M is at least one selected from the group consisting of metals selected from aluminum, magnesium, titanium, calcium, and zirconium, oxides or hydroxides of these metals, hydrates thereof, or carbonates of these metals; n, x, y, and z are each an integer of 1-5, an integer of 0-10, an integer of 2-5, and an integer of 0-10, respectively.]

As the inorganic compound of the general formula (XX), examples include alumina (Al₂O₃) such as γ-alumina and α-alumina, alumina monohydrate (Al₂O₃·H₂O) such as boehmite and diaspore, aluminum hydroxide [Al(OH)₃] such as gibbsite and bayerite, aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], magnesium-aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), calcium aluminum silicate (Al₂O₃·CaO·2SiO₂, etc.), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate salts containing hydrogen, alkali metals, or alkaline earth metals for charge compensation, such as various zeolites.

The inorganic compound of the general formula (XX) preferably has an average particle diameter of 0.01-10 µm, and more preferably 0.05-5 µm, from the viewpoint of balancing wear resistance and wet performance.

### (Void-forming agent)

Furthermore, it is preferable that the rubber composition further contains, in addition to the above-mentioned rubber component and filler, and the fatty acid amide and liquid polymer as suitable components, a void-forming agent. By including a void-forming agent in the rubber composition, the vulcanized rubber has voids on the surface or inside, or on both the surface and inside, so that a tire using such vulcanized rubber has flexibility and easily adheres to icy road surfaces, and water on the road surface is absorbed into the voids on the tire surface, making it easier to remove water from icy and snowy road surfaces, thereby improving on-ice braking performance.

Examples of the void-forming agent include, for example, foaming agents, metal sulfate salts, thermally expandable microcapsules, porous cellulose particles, lignin derivatives, and the like, and one or more of these may be used alone or in combination. Furthermore, from the viewpoint of on-ice performance, it is preferable to use the foaming agent.

The content of the void-forming agent in the rubber composition is not particularly limited, but from the viewpoint of obtaining a desired porosity and maintaining properties such as wear resistance, it is preferably 0.1-20 parts by mass, more preferably 0.3-10 parts by mass, and still more preferably 0.5-5 parts by mass, per 100 parts by mass of the rubber component.

### • Foaming agent

By including a foaming agent as the void-forming agent in the rubber composition, bubbles are generated in the vulcanized rubber by the foaming agent during vulcanization, and the vulcanized rubber can be made into foamed rubber. Since foamed rubber has flexibility, the surface of a tire using vulcanized rubber easily adheres to icy road surfaces. In addition, bubbles create holes (foam cells) derived from the bubbles on the surface of the vulcanized rubber and the tire surface, which function as channels for draining water.

Specific examples of the foaming agent include, for example, azodicarbonamide (ADCA), dinitrosopentamethylenetetramine (DPT), dinitrosopentastyrenetetramine, benzenesulfonylhydrazide derivatives, p,p'-oxybisbenzenesulfonylhydrazide (OBSH), ammonium carbonate, sodium carbonate, potassium carbonate, and other carbonates, ammonium bicarbonate, sodium bicarbonate, potassium bicarbonate, and other bicarbonates (hydrogen carbonates) as inorganic foaming agents, nitrososulfonylazo compounds that generate nitrogen, N,N'-dimethyl-N,N'-dinitrosophthalamide, toluenesulfonylhydrazide, p-toluenesulfonylsemicarbazide, p,p'-oxybisbenzenesulfonylsemicarbazide, and the like. Among these, from the viewpoint of manufacturing processability, it is preferable to use azodicarbonamide (ADCA), dinitrosopentamethylenetetramine (DPT), or inorganic foaming agents. These foaming agents may be used alone or in combination of two or more.

The content of the foaming agent in the rubber composition is not particularly limited, but is preferably 1-10 parts by mass, and more preferably 2-8 parts by mass, per 100 parts by mass of the rubber component.

The rubber composition may further contain, as a foaming aid, urea, zinc stearate, zinc benzenesulfinate, zinc oxide, and the like. These may be used alone or in combination of two or more. By using a foaming aid together, the foaming reaction can be promoted, the degree of completion of the reaction can be increased, and unnecessary deterioration over time can be suppressed.

### • Metal sulfate salt

When the rubber composition contains a metal sulfate salt as the void-forming agent, the metal sulfate salt protrudes from the surface of the tire obtained by vulcanizing the rubber composition, thereby functioning as a claw without the disadvantage of abrasiveness. Subsequently, as the metal sulfate salt gradually leaves the rubber matrix, cavities are formed, which function as storage volumes and channels for discharging the water film on the ice surface. Under these conditions, the contact between the tire surface (for example, the surface of the tread) and the ice is no longer lubricated, and therefore, the coefficient of friction is improved.

Examples of the metal sulfate salt include magnesium sulfate.

The metal sulfate salt is preferably a particle of micrometer size. Specifically, it is preferable that both the average particle size and the median particle size (both indicated by mass) are 1 µm to 1 mm, and more preferably, the median particle size is 2 µm to 800 µm.

When the average particle size and the median particle size are 1 µm or more, the targeted technical effect (i.e., formation of appropriate fine roughness) is more easily obtained. Further, when the average particle size and the median particle size are 1 mm or less, particularly when the rubber composition is used as a tread, it is possible to suppress deterioration in aesthetics (i.e., to suppress the appearance of excessively conspicuous particles on the tread surface) and to avoid impairing gripping performance on melting ice.

For all these reasons, it is preferable that the median particle size of the metal sulfate salt is 2 µm to 500 µm, and more preferably 5 to 200 µm. This particularly preferred particle size range appears to correspond to an optimal compromise between the desired surface roughness on one hand and good contact between the rubber composition and ice on the other.

Furthermore, for the same reasons as above, the content of the metal sulfate salt in the rubber composition is preferably 5 to 40 parts by mass, more preferably 10 to 35 parts by mass, per 100 parts by mass of the rubber component.

For analysis of particle size and calculation of the median particle size of fine particles (or the average diameter of fine particles assuming they are substantially spherical), various known methods using, for example, laser diffraction can be applied (see, for example, ISO-8130-13 or JIS K5600-9-3).

In addition, particle size analysis by mechanical sieving can also be easily and preferably used; the operation consists of sieving a specified amount of sample (for example, 200 g) on a vibrating table using various sieve diameters (for example, in a progressive ratio equal to 1.26, with meshes of 1000, 800, 630, 500, 400, ... 100, 80, and 63 µm) for 30 minutes; the oversize collected on each sieve is weighed with a precision balance; the percentage of oversize at each mesh diameter relative to the total mass of the material is estimated from the weighing; finally, the median particle size (or median diameter) or average particle size (or average diameter) is calculated from the particle size distribution histogram by a known method.

### • Thermally Expandable Microcapsules

The thermally expandable microcapsule has a structure in which a thermally expandable substance is encapsulated within a shell material formed of a thermoplastic resin. The shell material of the thermally expandable microcapsule can be formed from a nitrile-based polymer.

The thermally expandable substance encapsulated within the shell material of the microcapsule has the property of vaporizing or expanding upon heating, and examples include at least one selected from the group consisting of hydrocarbons such as isoalkanes and normal alkanes. Examples of isoalkanes include isobutane, isopentane, 2-methylpentane, 2-methylhexane, 2,2,4-trimethylpentane, and the like; examples of normal alkanes include n-butane, n-propane, n-hexane, n-heptane, n-octane, and the like. These hydrocarbons may be used alone or in combination. As a preferred form of the thermally expandable substance, it is preferable to use a liquid hydrocarbon at room temperature in which a gaseous hydrocarbon at room temperature is dissolved. By using such a mixture of hydrocarbons, it is possible to obtain sufficient expansion force from the low temperature region to the high temperature region in the vulcanization molding temperature range (150°C to 190°C) of an unvulcanized tire.

As such thermally expandable microcapsules, for example, products manufactured by Expancel AB of Sweden under the trade names "EXPANCEL 091DU-80" or "EXPANCEL 092DU-120," or products manufactured by Matsumoto Yushi-Seiyaku Co., Ltd. under the trade names "Matsumoto Microsphere F-85D" or "Matsumoto Microsphere F-100D," and the like can be used.

The content of the thermally expandable microcapsules in the rubber composition is preferably 0.1 to 10 parts by mass, more preferably 0.5 to 5 parts by mass, per 100 parts by mass of the rubber component.

### • Porous Cellulose Particles

When the rubber composition contains porous cellulose particles as the void-forming agent, if the porous cellulose particles are exposed on the surface of the tire obtained by vulcanizing the rubber composition, water on icy and snowy road surfaces can be absorbed by the porous cellulose particles, thereby removing water between the tire and the road surface. In addition, due to the presence of cellulose, which is a polysaccharide, interaction between the tire and water on icy and snowy road surfaces occurs, so that the interaction between the tire and water by the modified polyoxyalkylene glycol can be further enhanced.

The porous cellulose particles are cellulose particles having a porous structure with a porosity of 75% to 95%, and by blending them into the rubber composition, on-ice performance can be significantly improved. When the porosity of the porous cellulose particles is 75% or more, the effect of improving on-ice performance is excellent, and when the porosity is 95% or less, the strength of the particles can be increased. The porosity is more preferably 80% to 90%.

The porosity of the porous cellulose particles can be determined by measuring the volume of a fixed mass of sample (i.e., porous cellulose particles) with a graduated cylinder, determining the bulk specific gravity, and calculating according to the following formula: 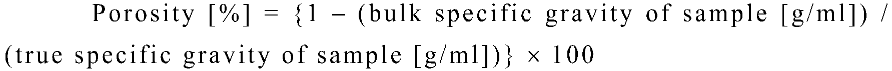 Porosity [%] = {1 - (bulk specific gravity of sample [g/ml]) / (true specific gravity of sample [g/ml])} × 100

Here, the true specific gravity of cellulose is 1.5.

The particle size of the porous cellulose particles is not particularly limited, but from the viewpoint of wear resistance, those having an average particle size of 1000 µm or less are preferably used. The lower limit of the average particle size is not particularly limited, but is preferably 5 µm or more. The average particle size is more preferably 100 to 800 µm, and still more preferably 200 to 800 µm.

As the porous cellulose particles, spherical particles having a long diameter/short diameter ratio of 1 to 2 are preferably used. By using such spherical particles, dispersibility in the rubber composition can be improved, contributing to the improvement of on-ice performance and the maintenance of wear resistance and the like. The long diameter/short diameter ratio is more preferably 1.0 to 1.5.

The average particle size and the long diameter/short diameter ratio of the porous cellulose particles are determined as follows. That is, the porous cellulose particles are observed under a microscope to obtain images, and using these images, the long diameter and short diameter of the particles (if the long diameter and short diameter are the same, the length in one axial direction and the length in the direction perpendicular thereto) are measured for 100 particles, and the average value is calculated to obtain the average particle size. The average value of the ratio of the long diameter to the short diameter gives the long diameter/short diameter ratio.

Such porous cellulose particles are commercially available from Rengo Co., Ltd. under the trade name "Viscopearl," and are also described in JP 2001-323095 A and JP 2004-115284 A, and these can be suitably used.

The content of the porous cellulose particles in the rubber composition is preferably 0.3 to 20 parts by mass per 100 parts by mass of the rubber component. When the content is 0.3 parts by mass or more, the effect of improving on-ice performance can be enhanced, and when the content is 20 parts by mass or less, it is possible to suppress excessive increase in rubber hardness and to suppress deterioration in wear resistance. The content of the porous cellulose particles is more preferably 1 to 15 parts by mass, and still more preferably 3 to 15 parts by mass.

### • Lignin Derivative

When the rubber composition contains a lignin derivative as the void-forming agent, the effect of improving on-ice performance can be enhanced.

Here, as the lignin derivative, lignin sulfonate is preferably used. Examples of lignin sulfonate include alkali metal salts, alkaline earth metal salts, ammonium salts, and alkanolamine salts of lignin sulfonic acid, and at least one of these can be used. Preferably, it is an alkali metal salt and/or an alkaline earth metal salt of lignin sulfonic acid, and examples include potassium salt, sodium salt, calcium salt, magnesium salt, lithium salt, barium salt, and the like, and mixed salts thereof may also be used.

### (Foaming Aid)

Furthermore, when the rubber composition contains a foaming agent as the void-forming agent, it is preferable to further include a foaming aid. Examples of the foaming aid include urea, zinc stearate, zinc benzenesulfinate, zinc oxide, and the like. These may be used alone or in combination of two or more.

By using the foaming aid in combination, it is possible to promote the foaming reaction, increase the degree of completion of the reaction, and suppress unnecessary deterioration over time.

Furthermore, the total content of the foaming agent and the foaming aid is preferably 1 to 30 parts by mass per 100 parts by mass of the rubber component. When the total content of the foaming agent and the foaming aid is 1 part by mass or more, the rubber composition can be sufficiently foamed during vulcanization, and the foaming ratio of the vulcanized rubber can be maintained at a high level. On the other hand, when the total content of the foaming agent and the foaming aid is 30 parts by mass or less, it is also possible to suppress a decrease in the foaming ratio.

From the viewpoint of suppressing a decrease in the foaming ratio as described above, the total content of the foaming agent and the foaming aid is preferably 3 parts by mass or more, more preferably 5 parts by mass or more, per 100 parts by mass of the rubber component. Also, from the viewpoint of suppressing a decrease in the foaming ratio as described above, the total content of the foaming agent and the foaming aid is preferably 25 parts by mass or less, more preferably 20 parts by mass or less, per 100 parts by mass of the rubber component.

In addition, in the rubber composition, the mass ratio (foaming agent:foaming aid) of the foaming agent to the foaming aid is preferably 1:1.1 to 1:3.3. If the mass ratio (foaming agent:foaming aid) is less than 1:1.1, the rubber composition may not be sufficiently foamed during vulcanization, and the foaming ratio of the vulcanized rubber may decrease; on the other hand, if the mass ratio (foaming agent:foaming aid) exceeds 1:3.3, the foaming ratio may also decrease.

From the viewpoint of suppressing a decrease in the foaming ratio as described above, the mass ratio (foaming agent:foaming aid) of the foaming agent to the foaming aid is preferably 1:1.2 or more, more preferably 1:1.3 or more. Also, from the viewpoint of suppressing a decrease in the foaming ratio as described above, the mass ratio (foaming agent:foaming aid) of the foaming agent to the foaming aid is preferably 1:3.2 or less, more preferably 1:3.1 or less, still more preferably 1:2.9 or less, even more preferably 1:2.7 or less, further preferably 1:2.5 or less, and particularly preferably 1:2.3 or less.

Further, the content of the foaming aid is preferably in the range of 4 to 14 parts by mass, more preferably in the range of 6 to 14 parts by mass, per 100 parts by mass of the rubber component, from the viewpoint of the foaming ratio of the vulcanized rubber and the on-ice performance of the tire.

### (Composite Fiber)

The rubber composition preferably further contains, in addition to the above-described rubber component and filler, and the preferred components such as fatty acid amide, liquid polymer, void-forming agent, and foaming aid, a composite fiber.

By including the composite fiber, sufficient affinity with water can be ensured, and particularly when used for tire applications, excellent drainage performance and on-ice performance can be imparted.

Further, it is preferable that the composite fiber is made of a hydrophilic resin having a coating layer formed on its surface. By providing a coating layer on the surface of the composite fiber, dispersibility of the composite fiber in the rubber composition is improved.

It is preferable that the hydrophilic resin is insoluble in water, and by adopting a hydrophilic resin that is insoluble in water, even when the composite fiber is exposed on the surface of the product (for example, a tire), dissolution of the composite fiber can be suppressed.

The hydrophilic resin is not particularly limited as long as it is a resin capable of exhibiting affinity with water, that is, a resin having a hydrophilic group in the molecule, but specifically, it is preferably a resin containing an oxygen atom, nitrogen atom, or sulfur atom, and examples include resins containing at least one group selected from the group consisting of -OH, -C(=O)OH, -OC(=O)R (where R is an alkyl group), -NH2, -NCO, and -SH. Among these groups, -OH, -C(=O)OH, -OC(=O)R, -NH2, and -NCO are preferred.

More specifically, as the hydrophilic resin, examples include ethylene-vinyl alcohol copolymer, vinyl alcohol homopolymer, poly(meth)acrylic acid resin or its ester resin (hereinafter, copolymers containing structural units derived from (meth)acrylic acid and (co)polymers containing structural units derived from (meth)acrylic acid ester are collectively referred to as (meth)acrylic resin), polyamide resin, polyethylene glycol resin, carboxyvinyl copolymer, styrene-maleic acid copolymer, polyvinylpyrrolidone resin, vinylpyrrolidone-vinyl acetate copolymer, polyester resin, cellulose resin, and the like. Among these, ethylene-vinyl alcohol copolymer, vinyl alcohol homopolymer, poly(meth)acrylic acid resin, polyamide resin, aliphatic polyamide resin, aromatic polyamide resin, polyester resin, polyvinyl alcohol resin, cellulose resin, or (meth)acrylic resin is preferred, and ethylene-vinyl alcohol copolymer is more preferred.

The surface of the fiber made of the hydrophilic resin preferably has a coating layer made of a low-melting-point resin having affinity for the rubber component and preferably having a melting point lower than the maximum vulcanization temperature (hereinafter also referred to as "low-melting-point resin"). By forming such a coating layer, it is possible to effectively retain the affinity with water inherent to the hydrophilic resin itself, to exhibit good affinity with the rubber component in the vicinity of the composite fiber, and to capture the hydrophilic resin, which is difficult to melt during vulcanization (foaming), thereby promoting the formation of voids inside the composite fiber. That is, it is possible to ensure good dispersion of the composite fiber in the rubber component and sufficiently exhibit the drainage effect due to the hydrophilic resin, while also sufficiently exhibiting the effect of improving on-ice performance due to the voids present inside the composite fiber. In addition, when such a low-melting-point resin melts during vulcanization, it becomes a flowable coating layer, contributing to adhesion between the rubber component and the composite fiber, thereby imparting good on-ice performance and wear resistance.

The thickness of the coating layer may vary depending on the blending amount of the hydrophilic resin and the average diameter of the composite fiber, but is preferably 0.001 to 10 µm, more preferably 0.001 to 5 µm. By forming the coating layer within the above thickness range, the desired effects in the present disclosure can be sufficiently exhibited. The coating layer may be formed over the entire surface of the hydrophilic resin or over a part of the surface of the hydrophilic resin, and specifically, it is preferable that the coating layer is formed in a proportion occupying at least 50% of the total surface area of the hydrophilic resin.

As the low-melting-point resin used for the coating layer, specifically, a resin in which the polar component is 50 mass% or less of the total components in the low-melting-point resin is preferred, and a polyolefin resin is more preferred. When the polar component is within the above range relative to the total components, the difference in SP value with the rubber component is appropriate, and the melting point is suitably lower than the maximum vulcanization temperature, so that good affinity with the rubber component can be sufficiently ensured, and the resin can easily melt during vulcanization to promote foaming of the vulcanized rubber. Therefore, it is possible to more reliably improve the dispersibility of the fiber made of the hydrophilic resin in the rubber composition and to reliably form voids inside the composite fiber.

The polyolefin resin may be branched, linear, or the like. Further, an ionomer resin in which the molecules of an ethylene-methacrylic acid copolymer are crosslinked with metal ions may also be used. Specifically, as the polyolefin resin, examples include polyethylene, polypropylene, polybutene, polystyrene, ethylene-propylene copolymer, ethylene-methacrylic acid copolymer, ethylene-ethylacrylate copolymer, ethylene-propylene-diene ternary copolymer, ethylene-vinyl acetate copolymer, and ionomer resins thereof. These may be used alone or in combination of two or more.

Among these, the polyolefin resin is preferably a polyethylene resin, polypropylene resin, polyolefin ionomer, or maleic anhydride-modified α-polyolefin. When a polyolefin ionomer or maleic anhydride-modified α-polyolefin is used, it also adheres to the hydroxyl group of the hydrophilic resin, making it possible to further improve the rubber strength.

In order to produce composite fibers composed of a hydrophilic resin having a coating layer formed from the aforementioned low-melting-point resin, a method may be employed in which these resins are blended using a mixing mill, subjected to melt spinning to form undrawn yarn, and the resulting undrawn yarn is then drawn while being heated to obtain fibers. Alternatively, a method may be adopted in which the resins are blended using two twin screw extruders equipped with dies, and then similarly formed into fibers. In this case, from the two die outlets, the hydrophilic resin and the low-melting-point resin are each extruded simultaneously, thereby forming undrawn yarn therefrom. The amount of each resin charged into the mixing mill or hopper may vary depending on the length and diameter of the resulting composite (fiber), but preferably, the amount of the low-melting-point resin is 5 to 300 parts by mass, more preferably 10 to 150 parts by mass, per 100 parts by mass of the hydrophilic resin. By charging these resins in amounts within the above range, a coating layer capable of exhibiting the desired effect can be effectively formed on the surface of the composite (fiber) composed of the hydrophilic resin obtained after the drawing step.

The average length of the resulting composite fibers is preferably 0.1 to 500 mm, more preferably 0.1 to 7 mm, and the average diameter is preferably 0.001 to 2 mm, more preferably 0.005 to 0.5 mm. When the average length and average diameter are within the above ranges, there is no risk of excessive entanglement between composite fibers, and there is also no risk of hindering good dispersibility. The aspect ratio is preferably 10 to 4,000, more preferably 50 to 2,000. Note that the aspect ratio refers to the ratio of the major axis to the minor axis of the composite fiber.

Furthermore, for the resulting composite fibers, the ratio (A/B) of the length A of the cross-section in the major axis direction to the length B of the cross-section in the minor axis direction, in a cross-section perpendicular to the major axis, is preferably greater than 1, more preferably 1.5 or more, still more preferably 1.8 or more, and particularly preferably 2.0 or more. The ratio A/B is preferably 20 or less, more preferably 15 or less, and particularly preferably 10 or less. By setting the above range, on-ice performance is further improved. Note that as long as A/B is greater than 1, the cross-sectional shape is not particularly limited and may be elliptical, rectangular, polygonal, irregular, or the like.

The blending amount of the composite fibers composed of a hydrophilic resin having the aforementioned coating layer is preferably 0.1 to 100 parts by mass, more preferably 0.3 to 30 parts by mass, still more preferably 0.5 to 10 parts by mass, and even more preferably 1 to 6 parts by mass, per 100 parts by mass of the rubber component. When the blending amount of the composite fibers composed of a hydrophilic resin having the aforementioned coating layer is within the above range, it is possible to form voids inside the composite fibers to exhibit good drainage performance while maintaining sufficient durability.

Furthermore, although the content ratio of the composite fibers and the void-forming agent is not particularly limited, from the viewpoint of achieving and improving both wear resistance and on-ice performance, the mass ratio (void-forming agent/composite fibers) is preferably 0.5 to 10, more preferably 1 to 8, still more preferably 1.5 to 7, and particularly preferably 2 to 6.

### (Hydrogenated Resin)

The rubber composition preferably further contains, in addition to the above-described rubber component and filler, and as suitable components, a fatty acid amide, filler, liquid polymer, foaming auxiliary, and composite fibers, a hydrogenated resin.

The hydrogenated resin, being easily compatible with the rubber component, can impart the flexibility required for gripping performance on wet and icy/snowy road surfaces to the tire, and can improve gripping performance on icy/snowy road surfaces, that is, on-ice performance.

Here, the hydrogenated resin refers to a resin obtained by reduction hydrogenation of a resin. Examples of resins serving as raw materials for the hydrogenated resin include C₅-based resins, C₅-C₉-based resins, C₉-based resins, terpene-based resins, dicyclopentadiene-based resins, terpene-aromatic compound-based resins, and the like. These resins may be used alone or in combination of two or more.

Examples of the C₅-based resin include aliphatic petroleum resins obtained by (co)polymerizing a C₅ fraction obtained by thermal cracking of naphtha in the petrochemical industry.

The C₅ fraction usually contains olefinic hydrocarbons such as 1-pentene, 2-pentene, 2-methyl-1-butene, 2-methyl-2-butene, 3-methyl-1-butene, and diolefinic hydrocarbons such as 2-methyl-1,3-butadiene, 1,2-pentadiene, 1,3-pentadiene, 3-methyl-1,2-butadiene, and the like. Note that commercially available C₅-based resins can be used.

The C₅-C₉-based resin refers to a C₅-C₉-based synthetic petroleum resin. Examples of the C₅-C₉-based resin include solid polymers obtained by polymerizing a petroleum-derived C₅-C₁₁ fraction using a Friedel-Crafts catalyst such as AlCl₃ or BF₃, and more specifically, copolymers mainly composed of styrene, vinyltoluene, α-methylstyrene, indene, and the like.

As the C₅-C₉-based resin, a resin with a low content of C₉ or higher components is preferable from the viewpoint of compatibility with the rubber component. Here, "low content of C₉ or higher components" means that the content of C₉ or higher components in the total resin is less than 50 mass%, preferably 40 mass% or less. Commercially available C₅-C₉-based resins can be used.

The C₉-based resin refers to a C₉-based synthetic petroleum resin, and specifically refers to a solid polymer obtained by polymerizing a C₉ fraction using a Friedel-Crafts catalyst such as AlCl₃ or BF₃.

Examples of the C₉-based resin include copolymers mainly composed of indene, α-methylstyrene, vinyltoluene, and the like.

The terpene-based resin is a solid resin obtained by compounding turpentine oil, which is obtained simultaneously with rosin from pine trees, or a polymerized component separated therefrom, and polymerizing using a Friedel-Crafts catalyst, and includes β-pinene resin, α-pinene resin, and the like. As a representative example of a terpene-aromatic compound-based resin, terpene-phenol resin can be mentioned. This terpene-phenol resin can be obtained by reacting terpenes and various phenols using a Friedel-Crafts catalyst, or further condensing with formalin. There is no particular limitation on the terpenes used as raw materials, but monoterpene hydrocarbons such as α-pinene and limonene are preferable, those containing α-pinene are more preferable, and α-pinene is particularly preferable.

The dicyclopentadiene-based resin refers to a resin obtained by polymerizing dicyclopentadiene using, for example, a Friedel-Crafts catalyst such as AlCl₃ or BF₃.

The resin serving as a raw material for the hydrogenated resin may include, for example, a resin obtained by copolymerizing a C₅ fraction and dicyclopentadiene (DCPD) (C₅-DCPD-based resin).

Here, when the content of dicyclopentadiene-derived components in the total resin is 50 mass% or more, the C₅-DCPD-based resin is included in the dicyclopentadiene-based resin. When the content of dicyclopentadiene-derived components in the total resin is less than 50 mass%, the C₅-DCPD-based resin is included in the C₅-based resin. The same applies even if a small amount of a third component or the like is included.

From the viewpoint of further improving compatibility between the rubber component and the hydrogenated resin and further enhancing snow performance of the tire, the hydrogenated resin is preferably at least one selected from the group consisting of hydrogenated C₅-based resin, hydrogenated C₅-C₉-based resin, and hydrogenated dicyclopentadiene-based resin (hydrogenated DCPD-based resin), more preferably at least one selected from the group consisting of hydrogenated C₅-based resin and hydrogenated C₅-C₉-based resin, and still more preferably hydrogenated C₅-based resin. It is also preferable that the resin has at least a hydrogenated DCPD structure or a hydrogenated cyclic structure in the monomer.

The softening point of the hydrogenated resin is preferably higher than 110°C. This is because when the softening point of the hydrogenated resin exceeds 110°C, the rolling resistance of the tire can be sufficiently reduced. From the viewpoint of further lowering the rolling resistance of the tire, the softening point of the hydrogenated resin is preferably 115°C or higher, more preferably 118°C or higher, still more preferably 123°C or higher, and even more preferably 125°C or higher. In addition, from the viewpoint of further improving the wet grip performance and snow performance of the tire, the softening point of the hydrogenated resin is preferably 145°C or lower, more preferably 138°C or lower, and still more preferably 133°C or lower.

The polystyrene-equivalent weight-average molecular weight of the hydrogenated resin is preferably 200 to 1200 g/mol. When the polystyrene-equivalent weight-average molecular weight of the hydrogenated resin is 200 g/mol or more, precipitation of the hydrogenated resin from the tire can be suppressed, and when it is 1200 g/mol or less, the hydrogenated resin can reliably be compatible with the rubber component.

From the viewpoint of suppressing precipitation of the hydrogenated resin from the tire and suppressing deterioration of the tire appearance, the polystyrene-equivalent weight-average molecular weight of the hydrogenated resin is preferably 500 g/mol or more, more preferably 550 g/mol or more, still more preferably 620 g/mol or more, still more preferably 670 g/mol or more, still more preferably 720 g/mol or more, still more preferably 750 g/mol or more, and even more preferably 780 g/mol or more. From the viewpoint of further enhancing compatibility of the hydrogenated resin with the rubber component and further enhancing the effect of the hydrogenated resin, the polystyrene-equivalent weight-average molecular weight of the hydrogenated resin is preferably 1300 g/mol or less, preferably 1100 g/mol or less, preferably 1050 g/mol or less, preferably 950 g/mol or less, preferably 900 g/mol or less, and even more preferably 850 g/mol or less.

Furthermore, the ratio of the softening point (Ts_{HR}) (unit: °C) of the hydrogenated resin to the polystyrene-equivalent weight-average molecular weight (Mw_{HR}) (unit: g/mol) of the hydrogenated resin is preferably 0.15 or more [0.15 ≤ (Ts_{HR}/Mw_{HR})].

From the viewpoint of further improving the wet grip performance and snow performance of the tire, (Ts_{HR}/Mw_{HR}) is more preferably 0.155 or more, still more preferably 0.158 or more, still more preferably 0.160 or more, and even more preferably 0.162 or more. From the viewpoint of suppressing deterioration of tire performance, (Ts_{HR}/Mw_{HR}) is preferably 0.2 or less, more preferably 0.185 or less, still more preferably 0.178 or less, still more preferably 0.172 or less, still more preferably 0.168 or less, and even more preferably 0.163 or less.

The content of the hydrogenated resin in the rubber composition is preferably 5 to 50 parts by mass per 100 parts by mass of the rubber component. When the content of the hydrogenated resin is 5 parts by mass or more per 100 parts by mass of the rubber component, the effect of the hydrogenated resin can be sufficiently exhibited, while when it is 50 parts by mass or less per 100 parts by mass of the rubber component, precipitation of the hydrogenated resin from the tire can be suppressed.

Furthermore, from the viewpoint of further enhancing the effect of the hydrogenated resin, the content of the hydrogenated resin in the rubber composition is preferably 7 parts by mass or more, more preferably 9 parts by mass or more, per 100 parts by mass of the rubber component. In addition, from the viewpoint of suppressing precipitation of the hydrogenated resin from the tire and suppressing deterioration of the tire appearance, the content of the hydrogenated resin in the rubber composition is preferably 40 parts by mass or less, more preferably 30 parts by mass or less, still more preferably 25 parts by mass or less, and even more preferably 20 parts by mass or less, per 100 parts by mass of the rubber component.

### (Cyclic Polyol Compound Having Hydrocarbyl Group)

Furthermore, the rubber composition preferably further contains, in addition to the above-described rubber component and filler, and as suitable components, a fatty acid amide, liquid polymer, void-forming agent, foaming auxiliary, composite fibers, and hydrogenated resin, a cyclic polyol compound having a hydrocarbyl group.

The cyclic polyol compound having a hydrocarbyl group contained in the rubber composition can greatly improve the wear resistance and anti-cut resistance of the vulcanized rubber composition for a tire of the present invention. In addition, by enhancing the interaction between the rubber molecules of the rubber component and the agent described later, the physical properties of the crosslinked rubber can be homogenized, resulting in improved reinforcement.

Furthermore, it has been found that the rubber composition having voids of the present invention exhibits further improved wear resistance and anti-cut resistance.

Moreover, since the cyclic polyol compound having a hydrocarbyl group has fewer hydrophilic sites compared to compounds such as sorbitol, it is possible to suppress self-aggregation in the rubber composition, thereby maintaining good elongation fatigue resistance of the vulcanized rubber composition for a tire.

Here, the content of the cyclic polyol compound having a hydrocarbyl group is preferably 0.1 to 5 parts by mass per 100 parts by mass of the natural rubber. When the content of the cyclic polyol compound having a hydrocarbyl group is 0.1 parts by mass or more per 100 parts by mass of the natural rubber, a sufficient effect of improving wear resistance can be obtained. On the other hand, when the content of the cyclic polyol compound having a hydrocarbyl group is 5 parts by mass or less per 100 parts by mass of the natural rubber, self-aggregation in the rubber composition can be reliably suppressed, and elongation fatigue resistance can be further improved.

From the same viewpoint, the content of the cyclic polyol compound having a hydrocarbyl group is preferably 0.1 to 3 parts by mass, more preferably 0.3 to 2.5 parts by mass, per 100 parts by mass of the natural rubber.

Note that, from the viewpoint of improving wear resistance and anti-cut resistance, the cyclic polyol compound having a hydrocarbyl group is preferably dispersed in the rubber component, and more preferably dispersed in the natural rubber.

The cyclic polyol compound having a hydrocarbyl group does not act as a surfactant for other compounding agents, but is dispersed in the rubber to improve wear resistance and anti-cut resistance, and is distinguished from surfactants.

Here, the cyclic polyol compound having a hydrocarbyl group preferably has two or more hydroxyl groups, and more preferably has three or more hydroxyl groups. By having a larger number of hydroxyl groups, the interaction between the rubber component and the additive is more strongly exhibited, thereby achieving even better wear resistance and anti-cut resistance. On the other hand, from the viewpoint of suppressing self-aggregation in the rubber due to an increased number of hydrophilic sites, it is preferable to have five or fewer hydroxyl groups, and more preferably four or fewer hydroxyl groups.

Furthermore, the cyclic polyol compound having a hydrocarbyl group is preferably a cyclic polyol compound having a hydrocarbyl ester group. This is because even better wear resistance and anti-cut resistance can be achieved.

Furthermore, from the viewpoint of achieving even better wear resistance and anti-cut resistance, the cyclic polyol compound having a hydrocarbyl group is more preferably a compound represented by the following formula (1).

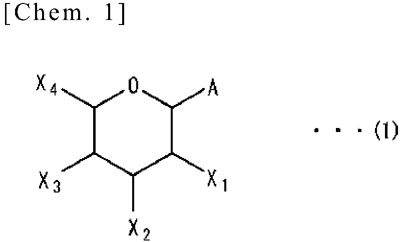

In formula (1) above, A is a hydrocarbyl ester group having 6 to 30 carbon atoms or a hydrocarbyl ether group having 6 to 30 carbon atoms, and the number of carbon atoms in the hydrocarbyl group portion of A is preferably 12 to 24. When the number of carbon atoms in the hydrocarbyl group portion of A in formula (1) is in the range of 12 to 24, wear resistance and anti-cut resistance are further improved while maintaining good elongation fatigue resistance.

Note that in formula (1), it is preferable that the first atom from the ring portion (i.e., the atom bonded to the ring) or the second atom from the ring portion is an oxygen atom. Examples of A in which the first atom from the ring portion is an oxygen atom include groups represented by -O-A' and -O-CO-A", and examples of A in which the second atom from the ring portion is an oxygen atom include groups represented by -CH₂-O-A" and -CH₂-O-CO-A‴, where A' is a hydrocarbyl group having 6 to 30 carbon atoms, A" is a hydrocarbyl group having 5 to 29 carbon atoms, and A‴ is a hydrocarbyl group having 4 to 28 carbon atoms, and more preferably, A', A", and A‴ are hydrocarbyl groups having 12 to 24 carbon atoms.

In formula (1) above, X₁, X₂, X₃, and X₄ are each independently -OH or -R (where -R is -H or -CH₂OH), provided that at least two of X₁, X₂, X₃, and X₄ are -OH. When two or more, preferably three or more, of X₁, X₂, X₃, and X₄ are -OH, the wear resistance and anti-cut resistance of the rubber composition are further improved.

Furthermore, among the compounds represented by the above formula (1), compounds represented by the following formula (2) or formula (3): 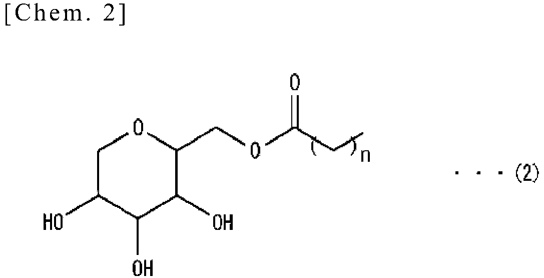 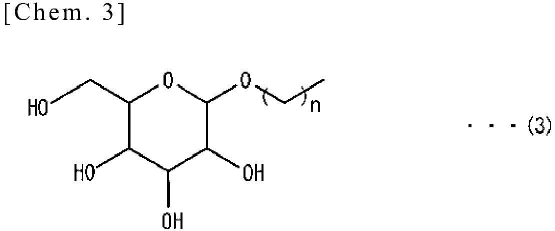 are more preferable, and compounds represented by the above formula (2) are particularly preferable.

Note that, in formula (2) and formula (3), n is a natural number, and a range of 11 to 23 is preferable.

By compounding a compound represented by the above formula (2) or formula (3) as the modified cyclic polyol compound, wear resistance can be further improved.

The cyclic polyol compound having a hydrocarbyl group is not particularly limited, but, for example, it can be obtained by reacting a polyol compound such as sorbitol, sorbitan, glucose, or fructose with an aliphatic alcohol such as octanol, decanol, dodecanol, tetradecanol, or hexadecanol, or with an aliphatic carboxylic acid such as lauric acid, myristic acid, palmitic acid, stearic acid, or oleic acid.

Specific examples of the cyclic polyol compound having a hydrocarbyl group include ester compounds such as sorbitan monolaurate, sorbitan monomyristate, sorbitan monopalmitate, sorbitan monostearate, and sorbitan monooleate, and ether compounds such as octyl-β-D-glucopyranoside, decyl-β-D-glucopyranoside, dodecyl-β-D-glucopyranoside, tetradecyl-β-D-glucopyranoside, and hexadecyl-β-D-glucopyranoside. These compounds may be used alone or in combination of two or more.

Furthermore, among these compounds, from the viewpoint of achieving both elongation fatigue resistance and anti-cut resistance at a higher level, it is preferable that the cyclic polyol compound having a hydrocarbyl group is sorbitan monostearate (sorbitan monoester).

Furthermore, the melting point of the cyclic polyol compound having a hydrocarbyl group is preferably 40 to 100°C, and more preferably 45 to 90°C. When the melting point of the cyclic polyol compound having a hydrocarbyl group is 100°C or lower, solubility during kneading and vulcanization reaction can be improved, and when it is 40°C or higher, anti-cut resistance at high temperatures can be enhanced.

### (Other Components)

The rubber composition may contain, in addition to the above-described components, compounding agents commonly used in the rubber industry as other components. Examples of such other components include, for example, silane coupling agents, vulcanizing agents, vulcanization accelerators, polyethylene glycol, softeners, antioxidants, zinc oxide, and the like, which may be appropriately selected and included within a range that does not impair the object of the present disclosure. Commercially available products can be suitably used as these compounding agents.

In addition, when silica is included as the above-described filler, it is preferable to further include a silane coupling agent. This is because the effects of anti-cut resistance, reinforcement, and low loss property by silica can be further enhanced. Note that a publicly known silane coupling agent can be appropriately used.

Examples of the silane coupling agent include: bis(3-triethoxysilylpropyl) polysulfide, bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-dimethoxymethylsilylpropyl) tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, and the like. These silane coupling agents may be used alone or in combination of two or more.

The content of the silane coupling agent varies depending on the type of silane coupling agent and the like, but it is preferable that the mass ratio to the content of the silica is 0.2 or less, more preferably 0.1 or less, and even more preferably 0.09 or less. By making the content of the silane coupling agent 0.2 or less in mass ratio to the content of the silica, the anti-cut resistance of the rubber composition can be further improved.

As the vulcanization accelerator, a conventionally known one can be used and is not particularly limited. For example, sulfenamide-based vulcanization accelerators such as CBS (N-cyclohexyl-2-benzothiazylsulfenamide), TBBS (N-t-butyl-2-benzothiazylsulfenamide), and TBSI (N-t-butyl-2-benzothiazylsulfenimide); guanidine-based vulcanization accelerators such as DPG (diphenyl guanidine); thiuram-based vulcanization accelerators such as tetraoctylthiuram disulfide and tetrabenzylthiuram disulfide; and zinc dialkyldithiophosphate and the like can be mentioned. The content thereof is preferably less than the content of sulfur, and more preferably about 1 to 10 parts by mass per 100 parts by mass of the rubber component.

Furthermore, the rubber composition may also contain a softener from the viewpoint of increasing the flexibility of the rubber and achieving even better wet performance and on-ice performance. The softener may be a conventionally known one and is not particularly limited, but examples include petroleum softeners such as aroma oil, paraffin oil, and naphthene oil, and vegetable softeners such as palm oil, castor oil, cottonseed oil, and soybean oil. When used, one or more of these may be appropriately selected and used. Note that the above softener does not include the fatty acid amide described above.

When the softener is included, from the viewpoint of handling easiness, it is preferable to include, among the above softeners, those that are liquid at room temperature such as 25°C, for example, petroleum softeners such as aroma oil, paraffin oil, and naphthene oil.

The method for producing the rubber composition is not particularly limited. For example, it can be obtained by compounding and kneading the above-described components by a known method.

### (Tire)

The tire of the present disclosure is characterized in that the above-described vulcanized rubber composition for a tire of the present disclosure is used in the tread portion. By applying the rubber composition to the tread portion, excellent on-ice performance can be achieved.

Here, the tire of the present disclosure can be used, for example, as a tire for construction vehicles, a tire for trucks and buses, a tire for aircraft, or a tire for passenger vehicles, and is particularly preferably a tire for passenger vehicles or a tire for trucks and buses. The vulcanized rubber composition for a tire used as the material for the tread portion is excellent in on-ice performance and wear resistance, and thus provides significant advantages when used as a tire for passenger vehicles or a tire for trucks and buses.

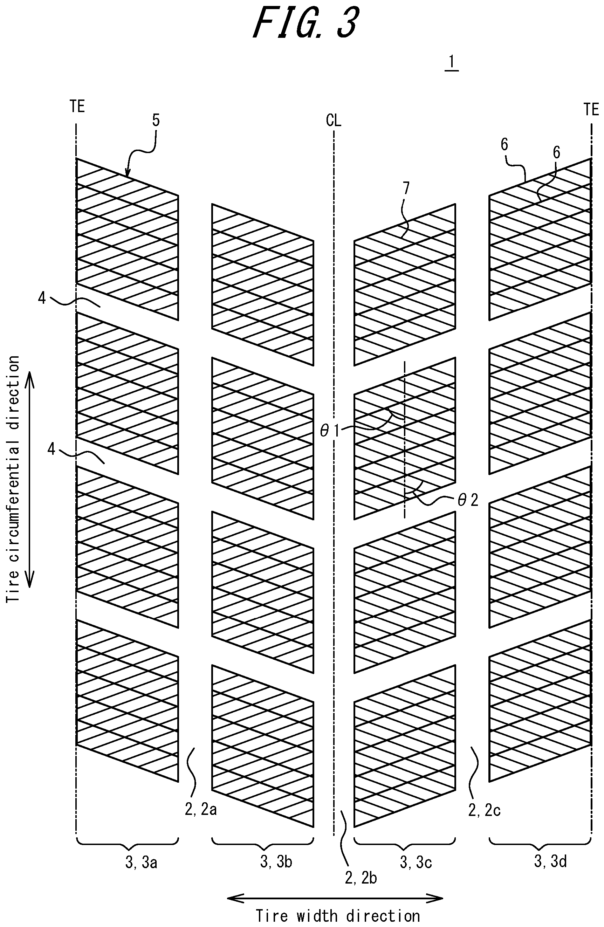

When the above-described vulcanized rubber composition for a tire of the present disclosure is used in the tread portion, the tread may have, for example, a tread pattern as illustrated in FIG. 3.

FIG. 3 is a developed view schematically illustrating the tread pattern of a tire according to one embodiment of the present disclosure (hereinafter also simply referred to as "the tire"). The internal structure of the tire is not particularly limited, but in accordance with convention, the tire may be provided with a pair of bead portions, a pair of sidewalls connected to the bead portions, and a tread portion connected to the sidewall portions. Furthermore, the tire may be provided with a carcass extending toroidally between the pair of bead portions, and a reinforcement layer such as a belt on the tire radial direction outer side of the crown portion of the carcass.

As illustrated in FIG. 3, this tire has a plurality of circumferential main grooves 2 extending in the tire circumferential direction on the tread surface 1 of the tread portion, and a plurality of land portions 3 are partitioned between the circumferential main grooves 2 or by the circumferential main grooves 2 and the tread edge TE.

In the illustrated example, three circumferential main grooves 2 are formed, with circumferential main groove 2a located in one half portion in the tire width direction with the tire equator CL as the boundary, circumferential main groove 2b extending along the tire equator CL, and circumferential main groove 2c located in the other half portion in the tire width direction with the tire equator CL as the boundary. On the other hand, the number of circumferential main grooves 2 is not limited to three, and any plural number may be used.

In the illustrated example, all circumferential main grooves 2 extend straight in the tire circumferential direction, but they may also extend in a zigzag, bent, or curved manner. Further, in the illustrated example, the circumferential main grooves 2 extend (without inclination) in the tire circumferential direction, but they may also extend at an inclination angle of 5° or less with respect to the tire circumferential direction. The groove width (opening width) of the circumferential main grooves 2 may be, for example, 2 mm to 12 mm. The groove depth (maximum depth) of the circumferential main grooves 2 may be, for example, 5 mm to 12 mm.

In the illustrated example, four land portions 3 are formed, with land portions 3a and 3b located in one half portion in the tire width direction with the tire equator CL as the boundary, and land portions 3c and 3d located in the other half portion in the tire width direction with the tire equator CL as the boundary. On the other hand, the number of land portions 3 corresponds to the number of circumferential main grooves 2, and may be three or more. Further, any of the land portions 3 may be located on the tire equator CL.

Each land portion 3 is provided with a plurality of width direction grooves 4 extending in the tire width direction. In the illustrated example, in each land portion 3, a plurality of width direction grooves 4 are arranged at approximately equal intervals in the tire circumferential direction, thereby partitioning the land portion 3 into a plurality of (substantially same-shaped) blocks 5.

In the illustrated example, all width direction grooves 4 extend straight, but they may also extend in a zigzag, bent, or curved manner. Further, the width direction grooves 4 may extend in the tire width direction, or may extend at an inclination angle of 60° or less (or 45° or less, or 30° or less) with respect to the tire width direction. The groove width (opening width) of the width direction grooves 4 may be, for example, 2 mm to 12 mm. The groove depth (maximum depth) of the width direction grooves 4 may be, for example, 5 mm to 12 mm. In the illustrated example, the width direction grooves 4 partitioning land portion 3a and the width direction grooves 4 partitioning land portion 3b are positioned on a straight line, and the width direction grooves 4 partitioning land portion 3c and the width direction grooves 4 partitioning land portion 3d are positioned on a straight line. With such a configuration, drainage performance can be further enhanced. On the other hand, the width direction grooves 4 partitioning land portion 3a and the width direction grooves 4 partitioning land portion 3b need not be positioned on a straight line (their virtual extension lines may be offset from each other in the tire circumferential direction), and similarly, the width direction grooves 4 partitioning land portion 3c and the width direction grooves 4 partitioning land portion 3d need not be positioned on a straight line (their virtual extension lines may be offset from each other in the tire circumferential direction). Further, in the illustrated example, the width direction grooves 4 located in one half portion in the tire width direction with the tire equator CL as the boundary and the width direction grooves 4 located in the other half portion in the tire width direction are inclined in opposite directions in the tire circumferential direction with respect to the tire width direction, but they may also be inclined in the same direction in the tire circumferential direction with respect to the tire width direction.

In this way, a plurality of blocks 5 are partitioned by a plurality of circumferential main grooves 2 extending in the tire circumferential direction and a plurality of width direction grooves 4 extending in the tire width direction. In the illustrated example, the blocks 5 are substantially parallelogram-shaped in this planar view, but are not limited to this shape.

As illustrated in FIG. 3, on the surface of block 5, a plurality of sipes 6 and a plurality of shallow grooves 7 are provided so as to extend in mutually opposite directions in the tire width direction with respect to one direction in the tire circumferential direction. The sipes 6 and shallow grooves 7 intersect each other.

In the illustrated example, four sipes 6 are arranged in each block 5. The number of sipes 6 may be any plural number and is not limited to four. Further, in the illustrated example, the four sipes 6 are arranged at equal intervals in the tire circumferential direction so that the size of the block pieces partitioned by the sipes 6 becomes substantially the same. On the other hand, the sipes 6 need not necessarily be arranged at equal intervals in the tire circumferential direction. In the illustrated example, the sipes 6 are flat plate-shaped sipes extending linearly in planar view, but may also extend in a zigzag manner. The sipes 6 may be so-called three-dimensional sipes in which the inner wall surface of the sipe forms an uneven shape along the sipe depth direction. In this example, both ends of the sipes 6 open to the circumferential main grooves 2, but one or both ends may terminate within the block 5.

In the present embodiment, the inclination angle θ1 of the sipes 6 with respect to the tire circumferential direction is more than 0° and less than 90°. The inclination angle θ1 is preferably 45° or more, more preferably 60° or more, and even more preferably 75° or more. In this example, the sipes 6 have the same inclination angle with respect to the tire circumferential direction as the width direction grooves 4, but they may be different.

In this example, the sipe depth (maximum depth) of the sipes 6 may be, for example, 5 to 8 mm.

In the illustrated example, fifteen shallow grooves 7 are arranged in each block 5. The number of shallow grooves 7 may be any plural number and is not limited to fifteen. Further, in the illustrated example, the fifteen shallow grooves 7 are arranged at equal intervals in the tire circumferential direction so that the size of the block pieces partitioned by the shallow grooves 7 becomes substantially the same. The pitch interval of the shallow grooves 7 in the tire circumferential direction may be, for example, 1.0 to 3.0 mm. On the other hand, the shallow grooves 7 need not necessarily be arranged at equal intervals in the tire circumferential direction. In the illustrated example, the shallow grooves 7 extend linearly in planar view, but may also extend in a zigzag manner. In this example, both ends of the shallow grooves 7 open to the circumferential main grooves 2, but one or both ends may terminate within the block 5.

In the present embodiment, the inclination angle θ2 of the shallow grooves 7 with respect to the tire circumferential direction is more than 0° and less than 90°. The inclination angle θ2 is preferably 45° or more, more preferably 60° or more, and even more preferably 75° or more.

The groove width (opening width) of the shallow grooves 7 is preferably 0.75 to 1.0 times the sipe width (opening width) of the sipes 6. Although not particularly limited, the groove width (opening width) of the shallow grooves 7 may be, for example, 0.3 to 0.4 mm. The groove depth (maximum depth) of the shallow grooves 7 is smaller than the depth (maximum depth) of the sipes 6. The groove depth (maximum depth) of the shallow grooves 7 may be, for example, 0.1 to 0.3 mm.

Here, in the present embodiment, the magnitude of the difference between the above inclination angle θ1 and the above inclination angle θ2 is 30° or less (the absolute value of θ1-θ2 is 30° or less). Further, the magnitude of the difference between the above inclination angle θ1 and the above inclination angle θ2 is preferably 15° or less.

The operational effects of the pneumatic tire of the present embodiment will be described below.

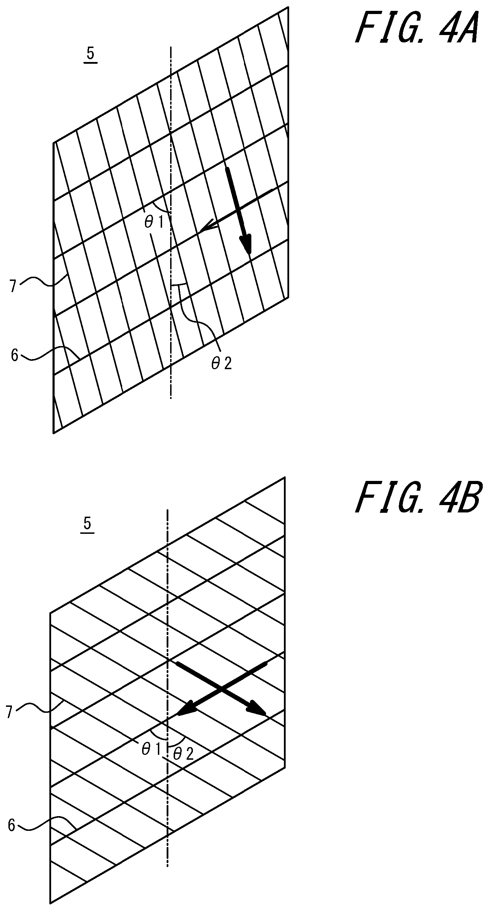

In order to solve the above problems, the present inventors studied the behavior of water on ice, focusing on the inclination angles of the sipes and shallow grooves with respect to the tire circumferential direction, in a tire in which sipes and shallow grooves are provided in the blocks. FIG. 4A is a diagram schematically illustrating the flow of water in the case of θ1 = 60° and θ2 = 15°. FIG. 4B is a diagram schematically illustrating the flow of water in the case of θ1 = θ2 = 60°. As schematically indicated in FIGS. 4A and 4B, when the magnitude of the difference in inclination angle with respect to the tire circumferential direction between the sipes and shallow grooves is large (FIG. 4A), as schematically indicated by the difference in thickness of the arrows, more water flows into the one with the smaller inclination angle with respect to the tire circumferential direction (the shallow grooves in FIG. 4A), resulting in uneven flow and making it easier for water to overflow. In contrast, when the magnitude of the difference in inclination angle with respect to the tire circumferential direction between the sipes and shallow grooves is small (including the case where it is zero) (FIG. 4B), water flows evenly through both the sipes and shallow grooves, making it less likely for water to overflow and improving the drainage function.

In the pneumatic tire of the present embodiment, since a plurality of sipes 6 and a plurality of shallow grooves 7 are provided on the surface of the block 5, particularly when new, both the sipes 6 and the shallow grooves 7 remove the water film, thereby improving on-ice gripping performance. Furthermore, the sipes 6 and the shallow grooves 7 are provided so as to extend in mutually opposite directions in the tire width direction with respect to one direction in the tire circumferential direction, and since the difference in magnitude between the above inclination angle θ1 and the above inclination angle θ2 is 30° or less, as schematically described in FIG. 4B, water flows uniformly through the sipes 6 and the shallow grooves 7, resulting in less water overflow, improved drainage function, and further improvement in on-ice gripping performance.

Here, if the above inclination angle θ1 is 0°, the edge component in the tire width direction (edge component with respect to the tire circumferential direction) due to the sipes 6 becomes small. Also, if the above inclination angle θ1 is 90°, the edge component in the tire circumferential direction (edge component with respect to the tire width direction) due to the sipes 6 becomes small. Similarly, if the above inclination angle θ2 is 0°, the edge component in the tire width direction (edge component with respect to the tire circumferential direction) due to the shallow grooves 7 becomes small. Also, if the above inclination angle θ2 is 90°, the edge component in the tire circumferential direction (edge component with respect to the tire width direction) due to the shallow grooves 7 becomes small.

It should be noted that the depth of the shallow grooves 7 is smaller than the depth of the sipes 6, and the shallow grooves 7 may, for example, be removed early by break-in driving.

As described above, according to the pneumatic tire of the present embodiment, on-ice gripping performance can be improved.

Here, it is preferable that the above inclination angle θ1 is 45° or more, more preferably 60° or more, and even more preferably 75° or more. This is because increasing the edge component in the tire width direction (edge component with respect to the tire circumferential direction) due to the sipes 6 and improving the function of wiping water in the tire circumferential direction can further improve on-ice gripping performance.

Furthermore, it is preferable that the above inclination angle θ2 is 45° or more, more preferably 60° or more, and even more preferably 75° or more. This is because increasing the edge component in the tire width direction (edge component with respect to the tire circumferential direction) due to the shallow grooves 7 and improving the function of wiping water in the tire circumferential direction can further improve on-ice gripping performance.

As described above, from the viewpoint of further improving on-ice gripping performance by allowing water to flow uniformly through the sipes 6 and the shallow grooves 7, it is more preferable that the difference in magnitude between the above inclination angle θ1 and the above inclination angle θ2 is 15° or less, even more preferable that it is 10° or less, particularly preferable that it is 5° or less, and most preferable that it is 0°.

It should be noted that even in cases where the difference in magnitude between the above inclination angle θ1 and the above inclination angle θ2 is more than 15° and 30° or less, it may be preferable from the viewpoint of ensuring the rigidity of the land portion and improving grounding property by preventing the occurrence of portions in the block pieces partitioned by the sipes 6 and the shallow grooves 7 where the acute angle is too small.

The groove width (opening width) of the shallow grooves 7 is preferably 0.75 to 1.0 times the sipe width (opening width) of the sipes 6. When the widths of the sipes 6 and the shallow grooves 7 are closer to being equivalent within the above range, and the difference in magnitude between the above inclination angle θ1 and the above inclination angle θ2 is within the above ranges, water flows more uniformly, and on-ice gripping performance can be further improved.

It should be noted that the compounds described in the present specification may be partially or entirely derived from fossil resources, derived from biological resources such as plant resources, or derived from recycled resources such as used tires. Furthermore, they may be derived from a mixture of any two or more of fossil resources, biological resources, and recycled resources.

### EXAMPLES

The present invention will be described in further detail below by way of examples, but the present invention is not limited in any way to the following examples.

### (Production of Acrylic Acid Ester-Modified Butadiene Rubber)

As described below, an acrylic acid ester-modified polymer, specifically acrylic acid ester-modified butadiene rubber (BR-2), was produced.

Into a reactor, 200 parts of deionized water, 4.5 parts of disproportionated rosin acid potassium/fatty acid sodium, 0.1 part of potassium chloride, 10 parts of methoxyethyl acrylate, and 0.3 part of t-dodecyl mercaptan (molecular weight modifier) were charged in this order, and after replacing the internal gas with nitrogen three times, 90 parts of 1,3-butadiene were charged. The reactor was maintained at 10°C, and 0.1 part of diisopropylbenzene hydroperoxide (polymerization initiator), a suitable amount of reducing agent, and a suitable amount of chelating agent were charged, and the polymerization reaction was started with stirring. The polymerization reaction was continued with stirring, and when the polymerization conversion rate reached 75%, 0.2 part of diethylhydroxylamine (polymerization terminator) was added to stop the polymerization reaction. After stopping the polymerization reaction, the residual monomer was removed at a water temperature of 60°C under reduced pressure, then 0.5 part of alkylated phenol as an antioxidantwas added, and subsequently, the obtained polymer latex was added to an aqueous calcium chloride solution to coagulate, thereby obtaining a crumb-like polymer. The obtained crumb-like polymer was taken out, washed with water, and then dried under reduced pressure at 60°C to obtain a diene-based polymer (A-1).

The obtained acrylic acid ester-modified butadiene rubber (BR-2) had a 1,3-butadiene unit content of 91 wt% (96.0 mol%), a methoxyethyl acrylate unit content of 9 wt% (4.0 mol%), a vinyl bond content in the 1,3-butadiene units of 16 mol%, a Mooney viscosity (ML1+4) of 55, and a glass transition temperature (Tg) of -76°C.

### (Samples 1 to 7)

Samples of rubber compositions were prepared by compounding and kneading according to the formulations indicated in Table 1 by conventional methods.

Each obtained sample was subjected to vulcanization treatment to produce a sample of vulcanized rubber composition for a tire, and the following evaluation (1) was conducted.

### (Evaluation)

### (1) On-Ice Performance of Vulcanized Rubber

Each sample of vulcanized rubber composition for a tire is molded into a test piece with a diameter of 50 mm and a thickness of 10 mm, and the frictional force generated when pressed against and rotated on fixed ice is detected with a load cell, and the dynamic friction coefficient µ is calculated. The measurement temperature is -2°C, the surface pressure is 12 kgf/cm², and the sample rotational peripheral speed is 20 cm/sec.

In Table 1, the evaluation is presented as an index with the dynamic friction coefficient µ of Comparative Example 1 set to 100. The larger the index value, the greater the dynamic friction coefficient µ, indicating better on-ice performance.

**[Table 1]**

| | | | Comparative Example | | | | | Example | |
|---|---|---|---|---|---|---|---|---|---|
| | | | 1 | 2 | 3 | 4 | 5 | 6 | 7 |
| | Elastomer component | NR | 50 | 50 | 50 | 50 | 50 | 50 | 50 |
| | | BR-1 *1 | 30 | - | 50 | 20 | 20 | - | - |
| | | BR-2 *2 | - | - | - | - | - | 20 | 20 |
| | | SBR *3 | 20 | 50 | - | 30 | 30 | 30 | 30 |
| | Carbon black *4 | | 35 | 35 | 35 | 35 | 25 | 25 | 20 |
| Formulation | Silica *5 | | 35 | 35 | 35 | 35 | 45 | 45 | 40 |
| | Silane coupling agent *6 | | 4 | 4 | 4 | 4 | 5 | 5 | 4.5 |
| | Resin *7 | | 15 | 15 | 15 | 15 | 15 | 15 | 15 |
| | Vulcanization accelerator *8 | | 1.5 | 1.5 | 1.5 | 1.5 | 1.5 | 1.5 | 1.5 |
| | Vulcanizing agent *9 | | 2 | 2 | 2 | 2 | 2 | 2 | 2 |
| | Age resistor *10 | | 2 | 2 | 2 | 2 | 2 | 2 | 2 |
| | Foaming agent *11 | | 4 | 4 | 4 | 4 | 4 | 4 | 4 |
| Evaluation | On-ice performance | | 100 | 95 | 95 | 103 | 106 | 109 | 112 |

| | | | | | | | | | |
|---|---|---|---|---|---|---|---|---|---|
| *1 BR-1: Manufactured by Ube Industries, Ltd., trade name "UBEPOL BR150L" *2 BR-2: Acrylic acid ester-modified butadiene rubber produced under the above conditions *3 SBR: Modified styrene-butadiene rubber produced by the following method | | | | | | | | | |

### (Production Method of Modified Styrene-Butadiene Rubber)

To an 800 mL pressure-resistant glass vessel that had been dried and purged with nitrogen, a cyclohexane solution of 1,3-butadiene and a cyclohexane solution of styrene were added so as to provide 67.5 g of 1,3-butadiene and 7.5 g of styrene, 0.6 mmol of 2,2-di-tetrahydrofurylpropane was added, and after adding 0.8 mmol of n-butyllithium, polymerization was conducted at 50°C for 1.5 hours. To the polymerization reaction system, in which the polymerization conversion rate was nearly 100%, 0.72 mmol of N,N-bis(trimethylsilyl)-3-[diethoxy(methyl)silyl]propylamine was added as a modifier, and a modification reaction was conducted at 50°C for 30 minutes. Thereafter, 2 mL of a 5 mass% solution of 2,6-di-t-butyl-p-cresol (BHT) in isopropanol was added to terminate the reaction, and the modified SBR was obtained by drying according to a conventional method. Measurement of the microstructure of the obtained modified SBR revealed a bound styrene content of 10 mass% and a vinyl bond content in the butadiene portion of 40%.
*4 Carbon black: SAF-grade carbon black
*5 Silica: "Nipsil AQ" manufactured by Tosoh Silica Corporation
*6 Silane coupling agent: "ABC-856" manufactured by Shin-Etsu Chemical Co., Ltd.
*7 Resin: "Quintone^{®} (Quintone is a registered trademark in Japan, other countries, or both) M100" manufactured by Zeon Corporation
*8 Vulcanization accelerator: Vulcanization accelerator containing "Nocceler CZ-G" manufactured by Ouchi Shinko Chemical Industrial Co., Ltd.
*9 Vulcanizing agent: "Sulfax 5" manufactured by Tsurumi Chemical Industry Co., Ltd.
*10 Antioxidant: "ANTIGENE 6C" manufactured by Sumitomo Chemical Co., Ltd.
*11 Foaming agent: Dinitrosopentamethylenetetramine, "Cellular Z-K" manufactured by Eiwa Chemical Industry Co., Ltd.

It should be noted that, in Table 1, in addition to the listed compounding ingredients, oil, stearic acid, and zinc oxide are included in the same amounts in each example and comparative example.

From the results in Table 1, it can be understood that the vulcanized rubber compositions for a tire of each example are superior in on-ice performance compared to the vulcanized rubber compositions for a tire of each comparative example.

### INDUSTRIAL APPLICABILITY

According to the present invention, it is possible to provide a vulcanized rubber composition for a tire having excellent on-ice performance. Furthermore, according to the present invention, it is also possible to provide a tire having excellent on-ice performance.

### REFERENCE SIGNS LIST

- 10: Vulcanized rubber composition for a tire
- 20: Void
- 1: Tread
- 2: Circumferential main groove
- 3: Land portion
- 4: Width direction groove
- 5: Block
- 6: Sipe
- 7: Shallow groove
- 100: Communication device
- CL: Tire equatorial plane
- TE: Tread edge

## Claims

1. A vulcanized rubber composition for a tire obtained through vulcanization of a rubber composition comprising: a rubber component that includes a modified conjugated diene-based polymer having a (meth)acrylic acid ester in a molecule; and a filler that includes at least silica, wherein
content of the silica in the rubber composition is 30 parts by mass to 70 parts by mass per 100 parts by mass of the rubber component, and a proportion constituted by the silica in the filler is 55 mass% or more, and
the vulcanized rubber composition for a tire has a plurality of voids.

2. The vulcanized rubber composition for a tire according to claim 1, wherein content of the (meth)acrylic acid ester in the modified conjugated diene-based polymer is 0.5 mol% to 10 mol%.

3. The vulcanized rubber composition for a tire according to claim 1 or 2, wherein the (meth)acrylic acid ester is a (meth)acrylic acid alkoxyalkyl ester.

4. The vulcanized rubber composition for a tire according to claim 1 or 2, wherein the modified conjugated diene-based polymer has a glass transition temperature of -100°C to -50°C.

5. The vulcanized rubber composition for a tire according to claim 1 or 2, wherein the modified conjugated diene-based polymer includes 1,3-butadiene units, and the 1,3-butadiene units have a vinyl bond content of 13 mol% to 18 mol%.

6. The vulcanized rubber composition for a tire according to claim 1 or 2, wherein a content ratio of the modified conjugated diene-based polymer in the rubber component is 5 mass% to 50 mass%.

7. The vulcanized rubber composition for a tire according to claim 1 or 2, wherein the rubber composition further comprises a liquid polymer having a bound styrene content of less than 10%, a conjugated diene unit vinyl bond content of 20% or more, and a polystyrene-equivalent weight-average molecular weight measured by gel permeation chromatography of less than 40,000.

8. The vulcanized rubber composition for a tire according to claim 7, wherein the conjugated diene unit vinyl bond content in the liquid polymer is not less than 45% and not more than 55%.

9. The vulcanized rubber composition for a tire according to claim 7, wherein the liquid polymer is unmodified polybutadiene.

10. The vulcanized rubber composition for a tire according to claim 7, wherein a content ratio of the liquid polymer is 1 mass% to 40 mass%.

11. The vulcanized rubber composition for a tire according to claim 7, wherein a mass ratio of content of the modified conjugated diene-based polymer to content of the liquid polymer (content of modified conjugated diene-based polymer/content of liquid polymer) is 0.5 to 5.

12. The vulcanized rubber composition for a tire according to claim 1 or 2, wherein the rubber composition further comprises a void-forming agent.

13. The vulcanized rubber composition for a tire according to claim 1 or 2, wherein the rubber composition further comprises composite fibers.

14. The vulcanized rubber composition for a tire according to claim 1 or 2, wherein the vulcanized rubber composition for a tire has a porosity of 5% to 45%.

15. The vulcanized rubber composition for a tire according to claim 1 or 2, wherein the rubber component includes: natural rubber; and unmodified butadiene rubber having a polystyrene-equivalent weight-average molecular weight measured by gel permeation chromatography of 40,000 or more or unmodified styrene-butadiene rubber having a polystyrene-equivalent weight-average molecular weight measured by gel permeation chromatography of 40,000 or more.

16. The vulcanized rubber composition for a tire according to claim 15, wherein a content ratio of the natural rubber in the rubber component is 30 mass% to 70 mass%.

17. The vulcanized rubber composition for a tire according to claim 15, wherein a content ratio of the unmodified butadiene rubber or the unmodified styrene-butadiene rubber in the rubber component is 15 mass% to 45 mass%.

18. The vulcanized rubber composition for a tire according to claim 1 or 2, wherein the rubber composition further comprises a fatty acid amide.

19. The vulcanized rubber composition for a tire according to claim 18, wherein the rubber composition comprises 0.1 parts by mass to 10 parts by mass of the fatty acid amide per 100 parts by mass of the rubber component.

20. The vulcanized rubber composition for a tire according to claim 19, wherein the fatty acid amide is a fatty acid bisamide.

21. The vulcanized rubber composition for a tire according to claim 20, wherein the fatty acid bisamide is an ethylene bis fatty acid amide.

22. A tire in which the vulcanized rubber composition for a tire according to claim 1 or 2 is used for a tread.
